# EUROPÄISCHE PATENTSCHRIFT

(11) **EP 3 417 017 B1**
(45) Veröffentlichungstag und Bekanntmachung des Hinweises auf die Patenterteilung: **09.11.2022**
(21) Anmeldenummer: 17704042.5
(22) Anmeldetag: 14.02.2017
(51) Int. Cl.: C09D 163/00

(54) **EMISSIONSARME FLÜSSIGFOLIE ZUR BAUWERKSABDICHTUNG**
LOW-EMISSION LIQUID FILM FOR SEALING CONSTRUCTIONS
FILM LIQUIDE FAIBLEMENT EMISSIF POUR L'ETANCHEMENT DES OUVRAGES

(30) Priorität: 15.02.2016 EP 16155770
(43) Veröffentlichungstag der Anmeldung: 26.12.2018
(73) Patentinhaber: Sika Technology AG, 6340 Baar (CH)
(72) Erfinder: HÄBERLE, Hans, 78262 Gailingen (DE); BURCKHARDT, Urs, 8049 Zürich (CH)
(74) Vertreter: Sika Patent Attorneys
(86) Internationale Anmeldenummer: PCT/EP2017/053319
(87) Internationale Veröffentlichungsnummer: WO 2017/140689

(56) Entgegenhaltungen:
- EP-A1- 1 695 989
- EP-A1- 1 840 166
- EP-A1- 2 562 223
- EP-A2- 0 186 191
- WO-A1-2011/151389
- WO-A1-2014/131757
- WO-A1-2015/117846
- WO-A2-2008/027496
- US-A1- 2014 288 247
- US-B1- 6 505 455

## Beschreibung

### Technisches Gebiet

Die Erfindung betrifft flüssig applizierbare reaktive Polymer-Zusammensetzungen und ihre Anwendung als flüssig applizierte Folien zum Abdichten von Bauwerken gegen eindringendes Wasser.

### Stand der Technik

Flüssig applizierbare reaktive Polymer-Zusammensetzungen, welche als rissüberbrückende Beschichtungen zum Abdichten von Bauwerken gegen eindringendes Wasser eingesetzt werden, sind seit längerem Stand der Technik. Sie werden auch als Flüssigfolien (liquid applied membrane oder "LAM") bezeichnet. Gegenüber vorgefertigten Abdichtungsbahnen bieten sie eine einfachere Applikation, insbesondere bei geometrisch komplexen Oberflächen, einen besseren Hinterlaufschutz aufgrund der vollflächigen Haftung zum Untergrund sowie eine nahtlose Verlegung. Gegenüber nicht-reaktiven flüssig applizierten Systemen wie Polymerlösungen, wässrigen Polymerdispersionen oder Produkten auf Bitumenbasis zeichnen sie sich durch eine hohe Festigkeit und eine hohe Elastizität, auch in der Kälte, aus, schmutzen wenig an und dichten auch unter stehendem Wasser dauerhaft ab. Um Bauwerke zuverlässig gegen eindringendes Wasser zu schützen, sind die rissüberbrückenden Eigenschaften einer ausgehärteten Flüssigfolie über einen weiten Temperaturbereich wichtig. Dazu muss das ausgehärtete Material über eine hohe Dehnbarkeit, eine hohe Festigkeit bei nicht allzu hohem Elastizitätsmodul und eine gute Weiterreissfestigkeit verfügen.

Die bekannten reaktiven Polymer-Flüssigfolien sind typischerweise Isocyanathaltige Polyurethane, welche als einkomponentige feuchtigkeitshärtende oder als zweikomponentige Systeme auf dem Markt sind. Sie weisen gute mechanische Eigenschaften und Beständigkeiten auf, haben aber auch technische Nachteile. So sind sie bei der Aushärtung empfindlich gegen Feuchtigkeit und Temperatur. Bei hoher Luftfeuchtigkeit, insbesondere in Kombination mit hoher Temperatur, bei feuchtem Untergrund oder direkter Wasserbeaufschlagung kann es zu Blasenbildung durch CO₂-Entwicklung kommen, welche die Beschichtung aufschäumen lässt und deren Abdichtungsfunktion und Beständigkeit beeinträchtigt. Bei warmen Bedingungen zeigen sie eine knappe Offenzeit und in der Kälte härten sie sehr langsam aus oder bleiben dauerhaft weich und klebrig. Ausserdem stehen sie wegen der EHS-kritischen Isocyanat-Monomere und dem oft hohen Gehalt an Lösemitteln, die unangenehme Gerüche und VOC-Emissionen verursachen, unter Regulierungsdruck, weshalb verstärkt nach Alternativen gesucht wird.

Als Isocyanat-freie Alternative zu den Polyurethan Flüssigfolien wurden solche auf Basis von silanfunktionellen Polymeren beschrieben, beispielsweise in EP 1 987 108. Allerdings weisen diese Produkte eine unerwünscht hohe Viskosität oder - um die Viskosität zu senken - einen sehr hohen Gehalt an niedrigmolekularen Silanen auf, wodurch bei der Aushärtung eine starke Emission von niedrigmolekularen Alkoholen und viel Schwund entsteht. Zudem härten sie langsam aus und bauen nur sehr eingeschränkt Festigkeit auf, so dass sie ohne Verstärkung durch ein Vlies oder ein Glasfasergelege nicht funktionstauglich sind.

Bekannt sind weiterhin zweikomponentige Polymer-Zusammensetzungen auf Basis einer Kombination von silanfunktionellen Polymeren mit Epoxidharzen, beispielsweise aus EP 0 186 191 und EP 0 370 464. Solche Systeme erreichen eine höhere Festigkeit und Zähigkeit als jene auf Basis von silanfunktionellen Polymeren alleine. Die bekannten Systeme sind aber nicht tauglich als flüssig applizierbare reaktive Polymer-Zusammensetzungen zur Bauwerksabdichtung. Sie weisen für eine Handapplikation zu hohe Viskositäten und ungeeignete mechanische Eigenschaften auf. (insert page no. 2a here)

### Darstellung der Erfindung

Aufgabe der vorliegenden Erfindung ist es, eine Isocyanatgruppen-freie, flüssig applizierbare reaktive Polymer-Zusammensetzung für die Bauwerksabdichtung zur Verfügung zu stellen, welche geruchsarm, wenig toxisch, emissionsarm, lange haltbar und mittels Handapplikation einfach zu verarbeiten ist, bei Umgebungstemperatur rasch und störungsfrei aushärtet und dabei eine hohe Festigkeit und Zähigkeit bei guter Dehnbarkeit aufbaut und über einen langen Zeitraum witterungsbeständig ist.

EP 2 562 223 betrifft eine zweikomponentige Zusammensetzung bestehend aus einer Komponente A umfassend mindestens ein silanfunktionelles Polymer und mindestens einen Härter oder Beschleuniger für Epoxidharze, und einer Komponente B umfassend mindestens eine wässrige Emulsion von mindestens einem Epoxidharz. Die offenbarten Zusammensetzungen eignen sich als Klebstoff, Dichtstoff oder Beschichtung.

WO2014/131757 beschreibt eine zweikomponentige Zusammensetzung bestehend aus einer Komponente A umfassend mindestens ein silanfunktionelles Polymer und mindestens ein Epoxidharz, und einer Komponente B umfassend Wasser und mindestens ein Amin-Epoxid-Addukt. Die Zusammensetzung härtet schnell zu einem elastischen Material von hoher Festigkeit und Beständigkeit aus und ist geeignet als Klebstoff und/oder Dichtstoff.

EP 1 695 989 beschäftigt sich damit, die Oberflächenklebrigkeit einer härtbaren Zusammensetzung zu verbessern, die ein reaktives Siliciumgruppen enthaltendes Polyoxypropylenpolymer enthält, ohne dabei die Festigkeit, Haftung und Erscheinung der Zusammensetzung zu vermindern.

Überraschenderweise wurde gefunden, dass eine Zusammensetzung nach Anspruch 1 diese Aufgabe löst. Sie verfügt über einen geringen Geruch und eine niedrige Toxizität und ist überraschend niedrigviskos, weshalb sie weitgehend oder ganz ohne Lösemittel formuliert werden kann. Bei Raumtemperatur verfügt sie über eine lange Offenzeit, härtet rasch aus und bildet ein hochwertiges, makroskopisch homogenes, nichtklebriges, hellfarbenes Material mit guten mechanischen Eigenschaften, insbesondere hoher Festigkeit und Dehnbarkeit bei tiefem E-Modul, und hoher Beständigkeit gegen Wasser, Wärme und UV-Strahlung. Aufgrund dieser Eigenschaften kann die flüssige Zusammensetzung als Abdichtungsmembran einfach appliziert und verarbeitet werden, härtet auch in feuchter oder kühler Umgebung schnell aus und bildet dabei eine qualitativ hochwertige Kunststoff-Membran von hoher Festigkeit und schöner Oberfläche, welche lange witterungsstabil ist.

Besonders überraschend ist dabei der Umstand, dass die vergleichsweise hohe Viskosität der Harzmatrix durch das Polyamin, insbesondere in den bevorzugten Ausführungsformen, sehr stark abgesenkt wird, wodurch auch ohne den Einsatz von Lösemitteln eine sehr gute Verarbeitung erreicht wird. Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist die Verwendung einer Zusammensetzung umfassend
- mindestens ein bei Raumtemperatur flüssiges Silangruppen-haltiges Polymer,
- mindestens ein Epoxid-Flüssigharz und
- mindestens ein aliphatisches Polyamin mit einem Molekulargewicht von mindestens 115 g/mol, welches mindestens drei gegenüber Epoxidgruppen reaktive Aminwasserstoffe aufweist,
als flüssig applizierte Abdichtungsfolie.

Die Zusammensetzung enthält zusätzlich mindestens einen aromatischen Verdünner mit einem Siedepunkt von mindestens 180 °C enthält, wobei es sich bei dem mindestens einen aromatischen Verdünner um 2-Phenoxyethanol, 2-Benzyloxyethanol, Benzylalkohol, Ethylenglykoldiphenylether, Propylenglykolphenylether, N-Ethylpyrrolidon, Diphenylmethanol, Diisopropylnaphthalin, Erdölfraktionen, Cardanol, styrolisiertes Phenol, Bisphenole, Phenolgruppen-haltige Kohlenwasserstoffharze, oder ethoxyliertes oder propoxyliertes Phenol handelt.

Im vorliegenden Dokument bezeichnet der Begriff "Alkoxysilangruppe" oder kurz "Silangruppe" eine an einen organischen Rest gebundene Silylgruppe mit einem bis drei, insbesondere zwei oder drei, hydrolysierbaren Alkoxy-Resten am Silicium-Atom.

Entsprechend bezeichnet der Begriff "Organosilan" oder kurz "Silan" eine organische Verbindung, welche mindestens eine Silangruppe aufweist.

Als "Aminosilan", "Mercaptosilan", "Hydroxysilan" bzw. "Isocyanatosilan" werden Organosilane bezeichnet, die am organischen Rest zusätzlich zur Silangruppe eine oder mehrere Amino-, Mercapto-, Hydroxyl- bzw. Isocyanatgruppen aufweisen.

Der Begriff "Silangruppen-haltiger Polyether" umfasst auch Silangruppen-haltige Polymere, welche zusätzlich zu Polyether-Einheiten auch Urethangruppen, Harnstoffgruppen oder Thiourethangruppen enthalten können. Solche Silangruppen-haltige Polyether werden auch als "Silangruppen-haltige Polyurethane" bezeichnet.

Mit "Poly" beginnende Substanznamen wie Polyamin oder Polyisocyanat bezeichnen Substanzen, die formal zwei oder mehr der in ihrem Namen vorkommenden funktionellen Gruppen pro Molekül enthalten.

Als "aliphatisches Polyamin" wird ein Polyamin bezeichnet, dessen Aminogruppen an einen aliphatischen oder cycloaliphatischen oder arylaliphatischen Rest gebunden sind.

Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.

Als "Aminwasserstoff" werden die Wasserstoffatome von primären und sekundären Aminogruppen bezeichnet.

Als "Aminwasserstoff-Equivalentgewicht" wird die Masse eines Amins oder einer Amin-haltigen Zusammensetzung, die ein Molequivalent Aminwasserstoff enthält, bezeichnet.

Als "Molekulargewicht" wird die molare Masse (in Gramm pro Mol) eines Moleküls bezeichnet. Als "mittleres Molekulargewicht" wird das Zahlenmittel Mₙ einer polydispersen Mischung von oligomeren oder polymeren Molekülen bezeichnet, welches üblicherweise mittels Gelpermeationschromatographie (GPC) gegen Polystyrol als Standard bestimmt wird.

Als "Viskosität" wird die dynamische Viskosität oder Scherviskosität bezeichnet, welche durch das Verhältnis zwischen der Schubspannung und der Scherrate (Geschwindigkeitsgefälle) definiert ist und wie in den Ausführungsbeispielen beschrieben bestimmt wird.

Als "lagerstabil" oder "lagerfähig" wird eine Substanz oder eine Zusammensetzung bezeichnet, wenn sie bei Raumtemperatur in einem geeigneten Gebinde während längerer Zeit, typischerweise mindestens drei bis zu sechs Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Die Abkürzung "VOC" steht für "volatile organic compounds", also flüchtige organische Substanzen, welche einen Dampfdruck von mindestens 0.01 kPa bei 293.14 K aufweisen.

Als "Lösemittel" wird eine das Silangruppen-haltige Polymer und/oder das Epoxid-Flüssigharz lösende Flüssigkeit bezeichnet, welche ein VOC ist und keine gegenüber Silan- oder Epoxidgruppen reaktive Gruppen enthält.

Eine gestrichelte Linie in den Formeln in diesem Dokument stellt jeweils die Bindung zwischen einem Substituenten und dem zugehörigen Molekülrest dar. Als "Raumtemperatur" wird eine Temperatur von 23 °C bezeichnet.

Die Zusammensetzung umfasst mindestens ein bei Raumtemperatur flüssiges Silangruppen-haltiges Polymer.

Dieses ist bevorzugt ein Silangruppen-haltiges organisches Polymer, insbesondere ein Polyolefin, Poly(meth)acrylat oder Polyether oder eine Mischform dieser Polymere, welches jeweils eine oder bevorzugt mehrere Silangruppen trägt. Die Silangruppen können seitlich in der Kette oder endständig sein.

Insbesondere ist das Silangruppen-haltige Polymer ein Silangruppen-haltiger Polyether. Dieser weist bevorzugt mehrheitlich Oxyalkylen-Einheiten, insbesondere 1,2-Oxypropylen-Einheiten, auf.

Das bei Raumtemperatur flüssige Silangruppen-haltige Polymer weist im Mittel bevorzugt 1.3 bis 4, insbesondere 1.5 bis 3, besonders bevorzugt 1.7 bis 2.8, Silangruppen pro Molekül auf. Die Silangruppen sind bevorzugt endständig.

Bevorzugte Silangruppen sind Trimethoxysilangruppen, Dimethoxymethylsilangruppen oder Triethoxysilangruppen.

Das bei Raumtemperatur flüssige Silangruppen-haltige Polymer weist bevorzugt ein mittleres Molekulargewicht, bestimmt mittels GPC gegenüber Polystyrol-Standard, im Bereich von 1'000 bis 20'000 g/mol, insbesondere von 2'000 bis 15'000 g/mol, auf.

Das Silangruppen-haltige Polymer enthält bevorzugt Endgruppen der Formel (II), 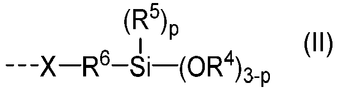 wobei
p für einen Wert von 0 oder 1 oder 2, bevorzugt für 0 oder 1, insbesondere für 0, steht,
R⁴ für einen linearen oder verzweigten, einwertigen Kohlenwasserstoffrest mit 1 bis 5 C-Atomen steht,
R⁵ für einen linearen oder verzweigten, einwertigen Kohlenwasserstoffrest mit 1 bis 8 C-Atomen, insbesondere für Methyl oder für Ethyl, steht,
R⁶ für einen linearen oder verzweigten, zweiwertigen Kohlenwasserstoffrest mit 1 bis 12 C-Atomen, welcher gegebenenfalls cyclische und/oder aromatische Anteile und gegebenenfalls ein oder mehrere Heteroatome, insbesondere ein oder mehrere Stickstoffatome, aufweist, steht,
X für einen zweiwertigen Rest ausgewählt aus --O-, --S-, --N(R⁷)-, --N(R⁷)-CO-, --O-CO-N(R⁷)-, --N(R⁷)-CO-O-, --N(R⁷)-CO-N(R⁷)-, --N(R⁷)-CO-O-CH(CH₃)-CO-N(R⁷)-, --N(R⁷)-CO-O-CH(R⁸)-CH₂-CH₂-CO-N(R⁷)- und --N(R⁷)-CO-O-CH(CH₃)-CH₂-O-CO-N(R⁷)-steht,
   wobei
   R⁷ für ein Wasserstoffatom oder für einen linearen oder verzweigten Kohlenwasserstoff-Rest mit 1 bis 20 C-Atomen, welcher gegebenenfalls cyclische Anteile aufweist, und welcher gegebenenfalls eine Alkoxysilylgruppe oder Ether- oder Carbonsäureestergruppen aufweist, steht, und R⁸ für einen unverzweigten Alkyl-Rest mit 1 bis6 C-Atomen, insbesondere für Methyl, steht.

Bevorzugt steht R⁴ für Methyl oder für Ethyl oder für Isopropyl.

Besonders bevorzugt steht R⁴ für Methyl. Solche Silangruppen-haltige Polymere sind besonders reaktiv.

Weiterhin besonders bevorzugt steht R⁴ für Ethyl. Solche Silangruppen-haltige Polymere sind besonders lagerstabil und toxikologisch vorteilhaft.

Bevorzugt steht R⁵ für Methyl.

Bevorzugt steht R⁶ für 1,3-Propylen oder für 1,4-Butylen, wobei Butylen mit einer oder zwei Methylgruppen substituiert sein kann.

Besonders bevorzugt steht R⁶ für 1,3-Propylen.

Verfahren zur Herstellung von Silangruppen-haltigen Polyethern sind dem Fachmann bekannt.

In einem Verfahren sind Silangruppen-haltige Polyether erhältlich aus der Umsetzung von Allylgruppen-haltigen Polyethern mit Hydrosilanen (Hydrosilylierung), gegebenenfalls unter Kettenverlängerung mit beispielsweise Diisocyanaten.

In einem weiteren Verfahren sind Silangruppen-haltige Polyether erhältlich aus der Copolymerisation von Alkylenoxiden und Epoxysilanen, gegebenenfalls unter Kettenverlängerung mit beispielsweise Diisocyanaten.

In einem weiteren Verfahren sind Silangruppen-haltige Polyether erhältlich aus der Umsetzung von Polyetherpolyolen mit Isocyanatosilanen, gegebenenfalls unter Kettenverlängerung mit Diisocyanaten.

In einem weiteren Verfahren sind Silangruppen-haltige Polyether erhältlich aus der Umsetzung von Isocyanatgruppen-haltigen Polyethern, insbesondere NCO-terminierten Urethan-Polyethern aus der Umsetzung von Polyetherpolyolen mit einer überstöchiometischen Menge an Polyisocyanaten, mit Aminosilanen, Hydroxysilanen oder Mercaptosilanen. Silangruppen-haltige Polyether aus diesem Verfahren sind besonders bevorzugt. Dieses Verfahren ermöglicht den Einsatz einer Vielzahl von kommerziell gut verfügbaren, kostengünstigen Ausgangsmaterialien, womit unterschiedliche Polymereigenschaften erhalten werden können, beispielsweise eine hohe Dehnbarkeit, eine hohe Festigkeit, eine tiefe Glasübergangstemperatur oder eine hohe Hydrolysebeständigkeit.

Bevorzugte Silangruppen-haltige Polyether sind erhältlich aus der Umsetzung von NCO-terminierten Urethan-Polyethern mit Aminosilanen oder Hydroxysilanen. Dafür geeignete NCO-terminierte Urethan-Polyether sind erhältlich aus der Umsetzung von Polyetherpolyolen, insbesondere Polyoxyalkylendiolen oder Polyoxyalkylentriolen, bevorzugt Polyoxypropylendiolen oder Polyoxypropylentriolen, mit einer überstöchiometrischen Menge an Polyisocyanaten, insbesondere Diisocyanaten.

Bevorzugt wird die Umsetzung zwischen dem Polyisocyanat und dem Polyetherpolyol unter Feuchtigkeitsausschluss bei einer Temperatur von 50 °C bis 160 °C durchgeführt, gegebenenfalls in Anwesenheit geeigneter Katalysatoren, wobei das Polyisocyanat so dosiert ist, dass dessen Isocyanatgruppen im Verhältnis zu den Hydroxylgruppen des Polyols im stöchiometrischen Überschuss vorhanden sind. Insbesondere wird der Überschuss an Polyisocyanat so gewählt, dass im resultierenden Urethan-Polyether nach der Umsetzung aller Hydroxylgruppen ein Gehalt an freien Isocyanatgruppen im Bereich von 0.1 bis 10 Gewichts-%, bevorzugt 0.2 bis 5 Gewichts-%, besonders bevorzugt 0.3 bis 3 Gewichts-%, bezogen auf das gesamte Polymer verbleibt.

Bevorzugte Diisocyanate sind ausgewählt aus der Gruppe bestehend aus 1,6-Hexamethylendiisocyanat (HDI), 1-Isocyanato-3,3,5-trimethyl-5-isocyanatomethyl-cyclohexan (=Isophorondiisocyanat oder IPDI), 2,4- und 2,6-Toluylendiisocyanat und beliebige Gemische dieser Isomeren (TDI) und 4,4'-, 2,4'- und 2,2'-Diphenylmethandiisocyanat und beliebige Gemische dieser Isomeren (MDI). Besonders bevorzugt sind IPDI oder TDI. Meist bevorzugt ist IPDI. Damit werden Silangruppen-haltige Polyether mit besonders guter Lichtechtheit erhalten.

Speziell geeignet als Polyetherpolyole sind Polyoxyalkylendiole oder Polyoxyalkylentriole mit einem Ungesättigtheitsgrad tiefer als 0.02 mEq/g, insbesondere tiefer als 0.01 mEq/g, und einem mittleren Molekulargewicht im Bereich von 400 bis 20'000 g/mol, insbesondere 1'000 bis 15'000 g/mol.

Neben Polyetherpolyolen können anteilig auch andere Polyole eingesetzt werden, insbesondere Polyacrylatpolyole oder Polyesterpolyole, sowie niedrigmolekulare Diole oder Triole.

Geeignete Aminosilane für die Umsetzung mit einem NCO-terminierten Urethan-Polyether sind primäre oder sekundäre Aminosilane. Bevorzugt sind 3-Aminopropyltrimethoxysilan, 3-Aminopropyldimethoxymethylsilan, 4-Aminobutyl-trimethoxysilan, 4-Amino-3-methylbutyl-trimethoxysilan, 4-Amino-3,3-dimethylbutyl-trimethoxysilan, N-Butyl-3-aminopropyltrimethoxysilan, N-Phenyl-3-aminopropyltrimethoxysilan, Addukte aus primären Aminosilanen wie 3-Aminopropyltrimethoxysilan, 3-Aminopropyldimethoxymethylsilan oder N-(2-Aminoethyl)-3-aminopropyltrimethoxysilan und Michael-Akzeptoren wie Acrylnitril, (Meth)acrylsäureestern, (Meth)acrylsäureamiden, Maleinsäure- oder Fumarsäurediestern, Citraconsäurediestern oder Itaconsäurediestern, insbesondere N-(3-Trimethoxysilylpropyl)aminobernsteinsäuredimethyl- oder -diethylester. Ebenfalls geeignet sind Analoga der genannten Aminosilane mit Ethoxy- oder Isopropoxygruppen anstelle der Methoxygruppen am Silicium. Geeignete Hydroxysilane für die Umsetzung mit einem NCO-terminierten Urethan-Polyether sind insbesondere erhältlich aus der Addition von Aminosilanen an Lactone, Lactide oder an cyclische Carbonate.

Bevorzugte Hydroxysilane dieser Art sind N-(3-Triethoxysilylpropyl)-2-hydroxy-propanamid, N-(3-Trimethoxysilylpropyl)-2-hydroxypropanamid, N-(3-Triethoxy-silylpropyl)-4-hydroxypentanamid, N-(3-Triethoxysilylpropyl)-4-hydroxyoctan-amid, N-(3-Triethoxysilylpropyl)-5-hydroxydecanamid oder N-(3-Triethoxysilyl-propyl)-2-hydroxypropylcarbamat.

Weitere geeignete Hydroxysilane sind erhältlich aus der Addition von Aminosilanen an Epoxide oder aus der Addition von Aminen an Epoxysilane. Bevorzugte Hydroxysilane dieser Art sind 2-Morpholino-4(5)-(2-trimethoxysilyl-ethyl)cyclohexan-1-ol, 2-Morpholino-4(5)-(2-triethoxysilylethy)cyclohexan-1-ol oder 1-Morpholino-3-(3-(triethoxysilyl)propoxy)propan-2-ol.

Als Silangruppen-haltige Polyether sind auch kommerziell erhältliche Produkte geeignet, insbesondere die Folgenden: MS Polymer^{™} (von Kaneka Corp., insbesondere die Typen S203H, S303H, S227, S810, MA903 und S943), MS Polymer^{™} bzw. Silyl^{™} (von Kaneka Corp., insbesondere die Typen SAT010, SAT030, SAT200, SAX350, SAX400, SAX725, MAX450, MAX951), Excestar^{®} (von Asahi Glass Co. Ltd., insbesondere die Typen S2410, S2420, S3430, S3630), SPUR+* (von Momentive Performance Materials, insbesondere die Typen 1010LM, 1015LM, 1050MM), Vorasil^{™} (von Dow Chemical Co., insbesondere die Typen 602 und 604), Desmoseal^{®} (von Covestro, insbesondere die Typen S XP 2458, S XP 2636, S XP 2749, S XP 2774 und S XP 2821), TEGOPAC^{®} (von Evonik Industries AG, insbesondere die Typen Seal 100, Bond 150, Bond 250), Polyvest^{®} (von Evonik, insbesondere die Typen EP ST-M und EP ST-E), Polymer ST (von Hanse Chemie AG/Evonik Industries AG, insbesondere die Typen 47, 48, 61, 61LV, 77, 80, 81); Geniosil^{®} STP (von Wacker Chemie AG,insbesondere die Typen E10, E15, E30, E35) oder Arufon (von Toagosei, insbesondere die Typen US-6100 oder US-6170).

Besonders bevorzugt als Silangruppen-haltiges Polymer ist ein Silangruppen-haltiger Polyether, welcher zusätzlich zu Silangruppen noch Urethangruppen und/oder Harnstoffgruppen aufweist. Diese resultieren typischerweise aus der Reaktion von Isocyanatgruppen mit Hydroxylgruppen oder primären oder sekundären Aminogruppen. Ein solches Silangruppen-haltiges Polymer ermöglicht eine besonders schnelle Aushärtung und besonders gute mechanische Eigenschaften, insbesondere eine hohe Zugfestigkeit bei hoher Dehnbarkeit.

Bevorzugt weist die Zusammensetzung einen Gehalt an Silangruppen-haltigem Polymer im Bereich von 10 bis 80 Gewichts-%, besonders bevorzugt im Bereich von 15 bis 70 Gewichts-%, insbesondere im Bereich von 15 bis 60 Gewichts-%, auf.

Die Zusammensetzung umfasst weiterhin mindestens ein Epoxid-Flüssigharz. Als Epoxid-Flüssigharz geeignet sind übliche technische Epoxidharze, die bei Raumtemperatur fliessfähig sind und eine Glasübergangstemperatur unterhalb von 25 °C aufweisen. Diese werden auf bekannte Art und Weise erhalten, insbesondere aus der Glycidylisierung von Verbindungen mit mindestens zwei aktiven Wasserstoffatomen, insbesondere Polyphenolen, Polyolen oder Aminen, durch Umsetzung mit Epichlorhydrin.

Geeignete Epoxid-Flüssigharze sind insbesondere aromatische Epoxid-Flüssigharze, insbesondere die Glycidylisierungsprodukte von:
- Bisphenol-A, Bisphenol-F oder Bisphenol-A/F, wobei A für Aceton und F für Formaldehyd steht, welche als Edukte zur Herstellung dieser Bisphenole dienten. Im Fall von Bisphenol-F können auch Stellungsisomere vorhanden sein, insbesondere abgeleitet von 2,4'- oder 2,2'-Hydroxyphenylmethan.
- Dihydroxybenzol-Derivaten wie Resorcin, Hydrochinon oder Brenzkatechin;
- weiteren Bisphenolen oder Polyphenolen wie Bis(4-hydroxy-3-methylphenyl)methan, 2,2-Bis(4-hydroxy-3-methylphenyl)propan (Bisphenol-C), Bis-(3,5-dimethyl-4-hydroxyphenyl)methan, 2,2-Bis(3,5-dimethyl-4-hydroxyphenyl)propan, 2,2-Bis(3,5-dibromo-4-hydroxyphenyl)propan, 2,2-Bis(4-hydroxy-3-tert.butylphenyl)propan, 2,2-Bis(4-hydroxyphenyl)butan (Bisphenol-B), 3,3-Bis(4-hydroxyphenyl)pentan, 3,4-Bis(4-hydroxyphenyl)hexan, 4,4-Bis(4-hydroxyphenyl)heptan, 2,4-Bis(4-hydroxyphenyl)-2-methylbutan, 2,4-Bis-(3,5-dimethyl-4-hydroxyphenyl)-2-methylbutan, 1,1-Bis(4-hydroxyphenyl)-cyclohexan (Bisphenol-Z), 1,1-Bis(4-hydroxyphenyl)-3,3,5-trimethylcyclohexan (Bisphenol-TMC), 1,1-Bis(4-hydroxyphenyl)-1-phenylethan, 1,4-Bis[2-(4-hydroxyphenyl)-2-propyl]benzol (Bisphenol-P), 1,3-Bis[2-(4-hydroxyphenyl)-2-propyl]benzol (Bisphenol-M), 4,4'-Dihydroxydiphenyl (DOD), 4,4'-Dihydroxybenzophenon, Bis(2-hydroxynaphth-1-yl)methan, Bis(4-hydroxynaphth-1-yl)methan, 1,5-Dihydroxynaphthalin, Tris(4-hydroxyphenyl)methan, 1,1,2,2-Tetrakis(4-hydroxyphenyl)ethan, Bis(4-hydroxyphenyl)ether oder Bis(4-hydroxyphenyl)sulfon;
- Kondensationsprodukten von Phenolen mit Formaldehyd, die unter sauren Bedingungen erhalten werden, wie Phenol-Novolaken oder Kresol-Novolaken, auch Bisphenol-F-Novolake genannt;
- aromatischen Aminen, wie Anilin, Toluidin, 4-Aminophenol, 4,4'-Methylendiphenyldiamin, 4,4'-Methylendiphenyldi-(N-methyl)amin, 4,4'-[1,4-Phenylen- bis(1-methylethyliden)]bisanilin (Bisanilin-P) oder 4,4'-[1,3-Phenylen-bis(1-methylethyliden)]bisanilin (Bisanilin-M).

Weitere geeignete Epoxid-Flüssigharze sind aliphatische oder cycloaliphatische Polyepoxide, insbesondere
- Glycidylether von gesättigten oder ungesättigten, verzweigten oder unverzweigten, cyklischen oder offenkettigen di-, tri- oder tetrafunktionellen C₂- bis C₃₀-Alkoholen, insbesondere Ethylenglykol, Propylenglykol, Butylenglykol, Hexandiol, Octandiol, Polypropylenglykolen, Dimethylolcyclohexan, Neopentylglykol, Dibromoneopentylglykol, Rizinusöl, Trimethylolpropan, Trimethylolethan, Pentaerythrol, Sorbit oder Glycerin, oder alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat oder Triglycidylisocyanurat, oder Umsetzungsprodukte von Epichlorhydrin mit Hydantoin.
- Epoxidharze aus der Oxidation von Olefinen, wie insbesondere Vinylcylohexen, Dicyclopentadien, Cyclohexadien, Cyclododecadien, Cyclododecatrien, Isopren, 1,5-Hexadien, Butadien, Polybutadien oder Divinylbenzol.

Bevorzugt ist ein Epoxid-Flüssigharz auf der Basis eines Bisphenols.

Besonders bevorzugt ist ein Epoxid-Flüssigharz auf der Basis eines Bisphenol-A-, Bisphenol-F- oder Bisphenol-A/F-Diglycidylethers, wie sie kommerziell beispielsweise von Dow, Huntsman oder Momentive erhältlich sind. Diese Epoxid-Flüssigharze weisen eine gut handhabbare Viskosität auf und ermöglichen hohe Festigkeiten und Beständigkeiten. Solche Flüssigharze können auch Anteile von Bisphenol A-Festharz oder Phenol-Novolaken enthalten.

Bevorzugt weist die Zusammensetzung einen Gehalt an Epoxid-Flüssigharz im Bereich von 5 bis 50 Gewichts-%, insbesondere 10 bis 40 Gewichts-%, auf. Eine solche Zusammensetzung weist eine hohe Festigkeit bei guter Dehnbarkeit auf.

Bevorzugt liegt in der Zusammensetzung das Gewichtsverhältnis zwischen Silangruppen-haltigem Polymer und Epoxid-Flüssigharz im Bereich von 80/20 bis 30/70, insbesondere 70/30 bis 40/60, besonders bevorzugt 60/40 bis 45/55. Eine solche Zusammensetzung weist eine hohe Festigkeit bei guter Dehnbarkeit auf und ermöglicht eine besonders gute Verarbeitbarkeit.

Für den Fall, dass die Zusammensetzung Weichmacher enthält, liegt in der Zusammensetzung das Gewichtsverhältnis zwischen der Summe aus Silangruppen-haltigem Polymer und Weichmacher und dem Epoxid-Flüssigharz bevorzugt im Bereich von 80/20 bis 45/55, insbesondere 70/30 bis 50/50.

Die Zusammensetzung umfasst weiterhin mindestens ein aliphatisches Polyamin mit einem Molekulargewicht von mindestens 115 g/mol, welches mindestens drei gegenüber Epoxidgruppen reaktive Aminwasserstoffe aufweist.

Geeignete solche Polyamine sind insbesondere die Folgenden:
- aliphatische, cycloaliphatische oder arylaliphatische primäre Diamine, insbesondere 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2(4),4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, Bis(4-aminocyclohexyl)methan (H₁₂-MDA), Bis(4-amino-3-methylcyclohexyl)methan, Bis(4-amino-3-ethylcyclohexyl)methan, Bis(4-amino-3,5-dimethylcyclohexyl)methan, Bis(4-amino-3-ethyl-5-methylcyclohexyl)methan, 1-Amino-3-aminomethyl-3,5,5-trimethylcyclohexan (Isophorondiamin oder IPDA), 2- oder 4-Methyl-1,3-diaminocyclohexan oder Mischungen davon, 1,3-Bis(aminomethyl)cyclohexan, 1,4-Bis(aminomethyl)cyclohexan, 2,5(2,6)-Bis(aminomethyl)bicyclo[2.2.1]heptan (NBDA), 3(4),8(9)-Bis(aminomethyl)tricyclo[5.2.1.0^{2,6}]decan, 1,4-Diamino-2,2,6-trimethylcyclohexan (TMCDA), 1,8-Menthandiamin, 3,9-Bis(3-aminopropyl)-2,4,8,10-tetraoxaspiro[5.5]undecan, 1,3-Bis(aminomethyl)benzol (MXDA) oder 1,4-Bis(aminomethyl)benzol;
- Ethergruppen-haltige aliphatische primäre Di- oder Triamine, insbesondere 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin oder höhere Oligomere dieser Diamine, Bis(3-aminopropyl)polytetrahydrofurane oder andere Polytetrahydrofurandiamine, cycloaliphatische Ethergruppen-haltige Diamine aus der Propoxylierung und nachfolgenden Aminierung von 1,4-Dimethylolcyclohexan, erhältlich insbesondere als Jeffamine^{®} RFD-270 (von Huntsman), oder Polyoxyalkylendi- oder -triamine, welche typischerweise Produkte aus der Aminierung von Polyoxyalkylendi- oder -triolen darstellen und beispielsweise erhältlich sind unter dem Namen Jeffamine^{®} (von Huntsman), unter dem Namen Polyetheramine (von BASF) oder unter dem Namen PC Amine^{®} (von Nitroil). Insbesondere geeignete Polyoxyalkylendi- oder -triamine sind Jeffamine^{®} D-230, Jeffamine^{®} D-400, Jeffamine^{®} D-2000, Jeffamine^{®} EDR-104, Jeffamine^{®} EDR-148, Jeffamine^{®} EDR-176, Jeffamine^{®} T-403, Jeffamine^{®} T-3000, Jeffamine^{®} T-5000, oder entsprechende Amine von BASF oder Nitroil;
- sekundäre Aminogruppen aufweisende Polyamine mit zwei primären aliphatischen Aminogruppen, wie insbesondere 3-(2-Aminoethyl)aminopropylamin, Bis(hexamethylen)triamin (BHMT), Triethylentetramin (TETA), Tetraethylenpentamin (TEPA), Pentaethylenhexamin (PEHA) oder höhere Homologe linearer Polyethylenamine wie Polyethylenpolyamin mit 5 bis 7 Ethylenamin-Einheiten (sogenanntes "higher ethylenepolyamine", HEPA), Produkte aus der mehrfachen Cyanoethylierung oder Cyanobutylierung und anschliessender Hydrierung von primären Di- und Polyaminen mit mindestens zwei primären Aminogruppen, wie Dipropylentriamin (DPTA), N-(2-Aminoethyl)-1,3-propandiamin (N3-Amin), N,N'-Bis(3-aminopropyl)ethylendiamin (N4-Amin), N,N'-Bis(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin oder N,N'-Bis(3-amino-1-ethylpropyl)-2-methyl-1,5-pentandiamin;
- tertiäre Aminogruppen aufweisende Polyamine, wie insbesondere N,N-Dimethyldi(1,3-propylen)triamin (DMAPAPA), N,N'-Bis(aminopropyl)piperazin, N,N-Bis(3-aminopropyl)methylamin, N,N-Bis(3-aminopropyl)ethylamin, N,N-Bis(3-aminopropyl)propylamin, N,N-Bis(3-aminopropyl)cyclohexylamin, N,N-Bis(3-aminopropyl)-2-ethylhexylamin, Produkte aus der doppelten Cyanoethylierung und nachfolgender Reduktion von Fettaminen, welche abgeleitet sind von natürlichen Fettsäuren, wie N,N-Bis(3-aminopropyl)dodecylamin oder N,N-Bis(3-aminopropyl)talgalkylamin, erhältlich als Triameen^{®} Y12D oder Triameen^{®} YT (von Akzo Nobel);
- aliphatische, cycloaliphatische oder arylaliphatische primäre Triamine, insbesondere 4-Aminomethyl-1,8-octandiamin, 1,3,5-Tris(aminomethyl)benzol, 1,3,5-Tris(aminomethyl)cyclohexan, Tris(2-aminoethyl)amin, Tris(2-amino-propyl)amin oder Tris(3-aminopropyl)amin; oder
- Diamine mit einer primären und einer sekundären Aminogruppe, insbesondere Produkte aus der reduktiven Alkylierung von primären aliphatischen Polyaminen mit Aldehyden oder Ketonen, wie insbesondere N-Benzyl-1,3-bis(aminomethyl)benzol, N-2-Ethylhexyl-1,3-bis(aminomethyl)benzol, N-Benzyl-1,2-propandiamin, N-(4-Methoxybenzyl)-1,2-propandiamin, N⁻(4-(Dimethylamino)benzyl)-1,2-propandiamin, N-Benzyl-1,2-ethandiamin, N-Methylcyohexl-1,2-propandiamin oder partiell styrolisierte Polyamine wie insbesondere styrolisiertes MXDA (erhältlich als Gaskamine^{®} 240 von Mitsubishi Gas Chemical).

Bevorzugt weist das aliphatische Polyamin ein Molekulargewicht von mindestens 120 g/mol, insbesondere mindestens 150 g/mol, auf.

Insbesondere ist das aliphatische Polyamin ausgewählt aus der Gruppe bestehend aus 2-Butyl-2-ethyl-1,5-pentandiamin (C11-Neodiamin), 2,2(4),4-Trimethylhexamethylendiamin (TMD), 1-Amino-3-aminomethyl-3,5,5-trimethylcyclohexan (IPDA), 2- oder 4-Methyl-1,3-diaminocyclohexan oder Mischungen davon, 1,3-Bis(aminomethyl)cyclohexan, 1,4-Bis(aminomethyl)cyclohexan, 2,5(2,6)-Bis(aminomethyl)bicyclo[2.2.1]heptan (NBDA), 1,3-Bis(aminomethyl)-benzol (MXDA), 1,4-Bis(aminomethyl)benzol, Polyoxyalkylendi- oder -triaminen mit einem mittleren Molekulargewicht im Bereich von 200 bis 500 g/mol und Diaminen mit einer primären und einer sekundären Aminogruppe und einem Molekulargewicht von mindestens 150 g/mol.

Davon bevorzugt sind Polyamine mit einem Molekulargewicht von mindestens 150 g/mol, also C11-Neodiamin, TMD, IPDA, NBDA, Polyoxyalkylendi- oder - triaminen mit einem mittleren Molekulargewicht im Bereich von 200 bis 500 g/mol oder Diamine mit einer primären und einer sekundären Aminogruppe und einem Molekulargewicht von mindestens 150 g/mol

Davon besonders bevorzugt ist ein Polyoxyalkylendi- oder -triamin mit einem mittleren Molekulargewicht im Bereich von 200 bis 500 g/mol, insbesondere Jeffamine^{®} D-230 oder Jeffamine^{®} D-400 oder Jeffamine^{®} T-403 (alle von Huntsman), oder entsprechende Amine von BASF oder Nitroil. Diese Polyamine sind wenig anfällig auf Carbamatisierung. Sie ermöglichen flüssig applizierte Abdichtungsfolien mit einer besonders guten Verarbeitbarkeit und guten mechanischen Eigenschaften.

Weiterhin besonders bevorzugt sind Diamine mit einer primären und einer sekundären Aminogruppe und einem Molekulargewicht von mindestens 150 g/mol.

Ganz besonders bevorzugt ist das aliphatische Polyamin ein Amin der Formel (I), 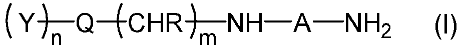 wobei
A für einen Alkylen-Rest mit 2 bis 15 C-Atomen, welcher gegebenenfalls ein oder mehrere Stickstoffatome enthält, steht,
R unabhängig voneinander für einen Wasserstoff- oder Methyl- oder Phenyl-Rest steht,
Q für einen fünf-, sechs- oder siebengliedrigen, im Ring gegebenenfalls ein Sauerstoff-, Schwefel- oder Stickstoffatom aufweisenden Cycloalkyl- oder ArylRest mit 4 bis 7 C-Atomen steht,
Y für gleiche oder verschiedene Reste ausgewählt aus der Gruppe bestehend aus Alkyl, Alkoxy und Dialkylamino mit 1 bis 18 C-Atomen steht,
m für 1 oder 2 steht und
n für 0 oder 1 oder 2 oder 3 steht.

Die Amine der Formel (I) sind vergleichsweise wenig anfällig auf Carbamatisierung. Dadurch ermöglichen sie Abdichtungsfolien, die bei Applikation in der Kälte und/oder bei hoher Luftfeuchtigkeit nicht zu Aushärtungsstörungen, welche durch Salzbildung (Carbamatisierung) der enthaltenen Amine mit CO₂ (sogenanntes Blushing) bedingt sind und sich insbesondere in Form von reduzierter Festigkeit zeigen. Die Amine der Formel (I) ermöglichen flüssig applizierte Abdichtungsfolien mit einer guten Verarbeitbarkeit und besonders guten mechanischen Eigenschaften.

A ist bevorzugt ausgewählt aus der Gruppe bestehend aus 1,2-Ethylen, 1,2-Propylen, 1,3-Propylen, 2-Methyl-1,5-pentylen, 1,6-Hexylen, 2,2(4),4-Trimethyl-1,6-hexylen, 1,3-Cyclohexylen-bis(methylen), 1,3-Phenylen-bis(methylen), (1,5,5-Trimethylcyclohexan-1-yl)methan-1,3, 3-Aza-1,5-pentylen, 3,6-Diaza-1,8-octylen, 3,6,9-Triaza-1,11-undecylen, 4-Aza-1,7-heptylen, 3-Aza-1,6-hexylen, 4,7-Diaza-1,10-decylen und 7-Aza-1,13-tridecylen.

Davon bevorzugt ist 1,2-Propylen. Diese Amine neigen besonders wenig zum Carbamatisieren und ermöglichen Abdichtungsfolien mit wenig Neigung zum Vergilben.

Davon weiterhin bevorzugt ist 1,3-Phenylen-bis(methylen). Diese Amine neigen wenig zum Carbamatisieren und ermöglichen eine besonders hohe Festigkeit.

Bevorzugt steht R unabhängig voneinander für einen Wasserstoff-Rest oder für Methyl, insbesondere jeweils für einen Wasserstoff-Rest. Diese Amine sind besonders einfach zugänglich und besonders niedrigviskos.

Bevorzugt steht Q für einen gegebenenfalls mit Y substituierten Phenyl-Rest. Diese Amine neigen besonders wenig zum Carbamatisieren.

Y steht bevorzugt für gleiche oder verschiedene Reste ausgewählt aus der Gruppe bestehend aus Alkyl, Alkoxy und Dialkylamino mit jeweils 1 bis 12, insbesondere 1 bis 4, C-Atomen. Besonders bevorzugt steht Y für Methyl oder für Methoxy oder für Dimethylamino. Ganz besonders bevorzugt steht Y für Methoxy oder für Dimethylamino.

Bevorzugt steht der Rest Y in meta- und/oder para-Stellung. Im Fall von n=1 steht der Rest Y insbesondere in para-Stellung.

n steht bevorzugt für 0 oder 1 oder 2, insbesondere für 0 oder 1.

Besonders bevorzugt steht n für 0. Diese Amine ermöglichen eine besonders gute Verarbeitbarkeit.

Für den Fall, dass n für 1 steht, steht Q insbesondere für einen mit Y substituierten Phenyl-Rest und Y steht insbesondere für Methoxy oder für Dimethylamino.

Besonders bevorzugt stehen A für 1,2-Propylen, R für einen Wasserstoff-Rest, Q für einen Phenyl-Rest, m für 1 und n für 0. Diese Amine ermöglichen eine ganz besonders gute Verarbeitbarkeit, eine besonders hohe Festigkeit und eine geringe Neigung zum Vergilben.

Weiterhin besonders bevorzugt stehen A für 1,3-Phenylen-bis(methylen), R für einen Wasserstoff-Rest, Q für einen Phenyl-Rest, m für 1 und n für 0. Dieses Amin ermöglicht eine ganz besonders gute Verarbeitbarkeit und eine besonders hohe Festigkeit.

Weiterhin besonders bevorzugt stehen A für 1,3-Phenylen-bis(methylen), R jeweils für einen Wasserstoff-Rest, Q für einen Phenyl-Rest, m für 2 und n für 0. Dieses Amin ermöglicht eine ganz besonders gute Verarbeitbarkeit und eine besonders hohe Festigkeit. Dieses Amin ist als Bestandteil von Gaskamine^{®} 240 (von Mitsubishi Gas Chemical) kommerziell erhältlich.

Das Amin der Formel (I) ist bevorzugt ausgewählt aus der Gruppe bestehend aus N-Benzyl-1,2-ethandiamin, N-(4-Methoxybenzyl)-1,2-ethandiamin, N-(4-(Dimethylamino)benzyl)-1,2-ethandiamin, N¹-Benzyl-1,2-propandiamin oder N²-Benzyl-1,2-propandiamin oder ein Gemisch dieser Isomeren, N¹-(4-Methoxybenzyl)-1,2-propandiamin oder N²-(4-Methoxybenzyl)-1,2-propandiamin oder ein Gemisch dieser Isomeren, N¹-(4-(Dimethylamino)benzyl)-1,2-propandiamin oder N²-(4-(Dimethylamino)benzyl)-1,2-propandiamin oder ein Gemisch dieser Isomeren, N-Benzyl-1,3-bis(aminomethyl)benzol und N-Phenylethyl-1,3-bis-(aminomethyl)benzol.

Davon bevorzugt ist N¹-Benzyl-1,2-propandiamin oder N²-Benzyl-1,2-propandiamin oder ein Gemisch dieser Isomeren. Diese Amine sind insbesondere erhältlich aus der reduktiven Alkylierung von 1,2-Propylendiamin mit Benzaldehyd und Wasserstoff. Sie werden insbesondere eingesetzt als mittels Destillation gereinigtes Reaktionsprodukt.

Davon weiterhin bevorzugt ist N-Benzyl-1,3-bis(aminomethyl)benzol. Dieses Amin ist insbesondere erhältlich aus der reduktiven Alkylierung von 1,3-Bis-(aminomethyl)benzol mit Benzaldehyd und Wasserstoff. Es wird insbesondere eingesetzt als Reaktionsprodukt enthaltend Anteile von N,N'-Dibenzyl-1,3-bis-(aminomethyl)benzol.

Davon weiterhin bevorzugt ist N-Phenylethyl-1,3-bis(aminomethyl)benzol. Dieses ist insbesondere erhältlich aus der Umsetzung von 1,3-Bis(aminomethyl)-benzol mit Styrol. Es wird insbesondere eingesetzt als Bestandteil des kommerziell erhältlichen Gaskamine^{®} 240 (von Mitsubishi Gas Chemical).

Bevorzugt enthält die Zusammensetzung so viel an Amin der Formel (I), dass die Anzahl Aminwasserstoffe des Amins der Formel (I) 25 bis 150%, insbesondere 30 bis 130%, der Anzahl enthaltener Epoxidgruppen entspricht.

Es kann vorteilhaft sein, eine Mischung von zwei oder mehr aliphatischen Polyaminen einzusetzen.

Bevorzugt sind Mischungen enthaltend mindestens ein Polyoxyalkylendi- oder -triamin mit einem mittleren Molekulargewicht im Bereich von 200 bis 500 g/mol und mindestens ein weiteres Polyamin ausgewählt aus der Gruppe bestehend aus 2,2(4),4-Trimethylhexamethylendiamin (TMD), 1-Amino-3-aminomethyl-3,5,5-trimethylcyclohexan (IPDA), 2- oder 4-Methyl-1,3-diaminocyclohexan oder Mischungen davon, 1,3-Bis(aminomethyl)cyclohexan, 1,4-Bis(aminomethyl)cyclohexan, 2,5(2,6)-Bis(aminomethyl)bicyclo[2.2.1]heptan (NBDA) und 1,3-Bis(aminomethyl)benzol (MXDA).

Dabei liegt das Gewichtsverhältnis zwischen dem Polyoxyalkylendi- oder-triamin und weiteren Polyaminen bevorzugt im Bereich von 99/1 bis 20/80, insbesondere 95/5 bis 30/70.

Weiterhin bevorzugt sind Mischungen enthaltend mindestens ein Amin der Formel (I) und mindestens ein weiteres Polyamin ausgewählt aus der Gruppe bestehend aus 2,2(4),4-Trimethylhexamethylendiamin (TMD), 1-Amino-3-aminomethyl-3,5,5-trimethylcyclohexan (IPDA), 1,3-Bis(aminomethyl)cyclohexan, 1,4-Bis(aminomethyl)cyclohexan, 2,5(2,6)-Bis(aminomethyl)bicyclo[2.2.1]-heptan (NBDA), 1,3-Bis(aminomethyl)benzol (MXDA) und Polyoxyalkylendi- oder -triaminen mit einem mittleren Molekulargewicht im Bereich von 200 bis 500 g/mol.

Davon bevorzugt sind Polyoxyalkylendi- oder -triamine mit einem mittleren Molekulargewicht im Bereich von 200 bis 500 g/mol.

Dabei liegt das Gewichtsverhältnis zwischen Polyoxyalkylendi- oder -triaminen und Aminen der Formel (I) bevorzugt im Bereich von 90/10 bis 10/90, insbesondere 70/30 bis 20/80.

Bevorzugt ist die Zusammensetzung frei von Amin-Epoxid-Addukten. Eine Adduktierung mit Epoxiden erhöht die Viskosität des Amins, was für die Verarbeitung der Zusammensetzung als flächige, selbstverlaufende Abdichtungsfolie nachteilig ist.

Bevorzugt enthält die Zusammensetzung nur Polyamine, welche bei Raumtemperatur flüssig vorliegen. Solche Polyamine sind besonders einfach handhabbar.

Die Zusammensetzung enthält bevorzugt weiterhin mindestens ein Aminosilan oder Epoxysilan oder Mercaptosilan.

Ein geeignetes Epoxysilan ist insbesondere 3-Glycidoxypropyltrimethoxysilan oder 3-Glycidoxypropyldimethoxymethylsilan oder 3-Glycidoxypropyltriethoxysilan.

Ein geeignetes Mercaptosilan ist insbesondere 3-Mercaptopropyltrimethoxysilan oder 3-Mercaptopropyldimethoxymethylsilan oder 3-Mercaptopropyltriethoxysilan.

Besonders bevorzugt enthält die Zusammensetzung mindestens ein Aminosilan.

Ein geeignetes Aminosilan ist insbesondere ausgewählt aus der Gruppe bestehend aus 3-Aminopropyltrimethoxysilan, N-(2-Aminoethyl)-3-aminopropyltrimethoxysilan, 3-Amino-2-methylpropyltrimethoxysilan, 4-Aminobutyltrimethoxysilan, 4-Amino-3,3-dimethylbutyltrimethoxysilan, 3-Aminopropyldimethoxymethylsilan, N-(2-Aminoethyl)-3-aminopropyldimethoxymethylsilan und N-(2-Aminoethyl)-N'-[3-(trimethoxysilyl)propyl]ethylendiamin, sowie deren Analoga mit Ethoxygruppen anstelle der Methoxygruppen am Silicium.

Davon besonders bevorzugt ist 3-Aminopropyltrimethoxysilan, 3-Aminopropyltriethoxysilan, N-(2-Aminoethyl)-3-aminopropyltrimethoxysilan oder N-(2-Aminoethyl)-3-aminopropyltriethoxysilan.

Bevorzugt weist die Zusammensetzung einen Gehalt an Aminosilan im Bereich von 0.1 bis 5 Gewichts-%, insbesondere im Bereich von 0.2 bis 3 Gewichts-%, auf. Solche Zusammensetzungen weisen eine besonders hohe Festigkeit auf.

Die Zusammensetzung ist bevorzugt eine zweikomponentige Zusammensetzung bestehend aus einer ersten und einer zweiten Komponente, welche voneinander getrennt herstellt, verpackt und gelagert werden, wobei das aliphatische Polyamin nicht in der gleichen Komponente wie das Epoxid-Flüssigharz vorliegt.

Ein gegebenenfalls vorhandenes Aminosilan oder Mercaptosilan liegt dabei bevorzugt in der gleichen Komponente wie das aliphatische Polyamin vor.

Ein gegebenenfalls vorhandenes Epoxysilan liegt dabei bevorzugt in der gleichen Komponente wie das Epoxid-Flüssigharz vor.

Bevorzugt liegen alle gegenüber Epoxid-Gruppen reaktiven Bestandteile nicht in der gleichen Komponente wie das Epoxid-Flüssigharz vor.

Weiterhin bevorzugt ist die Zusammensetzung eine dreikomponentige Zusammensetzung bestehend aus einer ersten, einer zweiten und einer dritten Komponente, welche voneinander getrennt hergestellt, verpackt und gelagert werden, wobei das Epoxid-Flüssigharz, das aliphatische Polyamin und das Silangruppen-haltige Polymer je in einer separaten Komponente vorliegen.

In einer bevorzugten Ausführungsform der Erfindung umfasst die Zusammensetzung eine erste Komponente enthaltend
- mindestens ein bei Raumtemperatur flüssiges Silangruppen-haltiges Polymer und
- mindestens ein Epoxid-Flüssigharz,
   und eine zweite Komponente enthaltend
- mindestens ein aliphatisches Polyamin mit einem Molekulargewicht von mindestens 115 g/mol, welches mindestens drei gegenüber Epoxidgruppen reaktive Aminwasserstoffe aufweist und
- gegebenenfalls mindestens ein Aminosilan.

In einer weiteren bevorzugten Ausführungsform der Erfindung umfasst die Zusammensetzung eine erste Komponente enthaltend
- mindestens ein bei Raumtemperatur flüssiges Silangruppen-haltiges Polymer,
- mindestens ein aliphatisches Polyamin mit einem Molekulargewicht von mindestens 115 g/mol, welches mindestens drei gegenüber Epoxidgruppen reaktive Aminwasserstoffe aufweist und
- gegebenenfalls mindestens ein Aminosilan,
   und eine zweite Komponente enthaltend
- mindestens ein Epoxid-Flüssigharz.

In einer weiteren bevorzugten Ausführungsform der Erfindung umfasst die Zusammensetzung
- eine erste Komponente enthaltend mindestens das Epoxid-Flüssigharz,
- eine zweite Komponente enthaltend mindestens das aliphatische Polyamin mit einem Molekulargewicht von mindestens 115 g/mol, welches mindestens drei gegenüber Epoxidgruppen reaktive Aminwasserstoffe aufweist,
- und eine dritte Komponente enthaltend mindestens das bei Raumtemperatur flüssige Silangruppen-haltige Polymer und gegebenenfalls mindestens ein Amino-, Mercapto- oder Epoxysilan.

Diese Aufteilung der Komponenten beinhaltet die attraktive Möglichkeit, dass eine kommerzielle Epoxidharz-Beschichtung, beispielweise ein Primer, eine Deckbeschichtung oder ein Topcoat, welche aus einer ersten und einer zweiten Komponente besteht, mit einer dritten Komponente enthaltend das Silangruppen-haltige Polymer kombiniert wird.

Jede dieser Möglichkeiten kann als zusätzliche Komponente Zusätze wie Füllstoffe, Fasern, Gummigranulat oder ähnliches aufweisen, welche separat verpackt sind und beim Vermischen der Komponenten mitverarbeitet werden.

Bei all diesen Ausführungsformen sind die Komponenten für sich allein unter Ausschluss von Feuchtigkeit lagerstabil. Beim Vermischen der Komponenten reagieren primäre und/oder sekundäre Aminogruppen mit vorhandenen Epoxidgruppen. Silangruppen reagieren unter Freisetzung von Alkohol, wenn sie mit Wasser in Kontakt kommen.

In einer Ausführungsform der Erfindung enthält die Zusammensetzung Wasser oder eine Wasser freisetzende Substanz. Eine solche Zusammensetzung weist den Vorteil auf, dass das zur Vernetzung der Silangruppen notwendige Wasser nicht aus der Umgebung aufgenommen werden muss.

Bevorzugt liegt dabei das Epoxidharz nicht als wässrige Emulsion vor. Bevorzugt enthält die Zusammensetzung gesamthaft bis zu 1 Gewichts-% freies oder freisetzbares Wasser. Eine solche Zusammensetzung härtet schnell aus, auch bei geringer Luftfeuchtigkeit, und weist nur einen geringen Schwund auf, was für eine flüssige Abdichtungsfolie mit grossflächiger Anwendung besonders wichtig ist.

Die Zusammensetzung enthält bevorzugt zusätzlich mindestens einen weiteren Bestandteil ausgewählt aus Trocknungsmitteln, Beschleunigern und Weichmachern.

Als Trockungsmittel geeignet sind insbesondere Tetraethoxysilan, Vinyltrimethoxysilan, Vinyltriethoxysilan, Organosilane, welche in α-Stellung zur Silangruppe eine funktionelle Gruppe aufweisen, insbesondere N-(Methyldimethoxysilylmethyl)-O-methylcarbamat oder (Methacryloxymethyl)silane, Methoxymethylsilane, Orthoameisensäureester, sowie Calciumoxid oder Molekularsiebe.

Besonders bevorzugt enthält die Zusammensetzung Vinyltrimethoxysilan oder Vinyltriethoxysilan. Dabei ist Vinyltrimethoxysilan für den Fall bevorzugt, dass das Silangruppen-haltige Polymer Methoxysilangruppen aufweist, während Vinyltriethoxysilan für den Fall bevorzugt ist, dass das Silangruppen-haltige Polymer Ethoxysilangruppen aufweist.

Im Fall einer zweikomponentigen Zusammensetzung ist das Trockungsmittel, insbesondere das Vinyltrimethoxy- oder -triethoxysilan, bevorzugt in der gleichen Komponente enthalten wie das Silangruppen-haltige Polymer.

Als Beschleuniger geeignet sind Substanzen, welche die Vernetzung von Silangruppen-haltigen Polymeren beschleunigen. Dafür geeignet sind insbesondere Metallkatalysatoren und/oder stickstoffhaltige Verbindungen.

Geeignete Metallkatalysatoren sind Verbindungen von Titan, Zirkonium, Aluminium oder Zinn, insbesondere Organozinn-Verbindungen, Organotitanate, Organozirkonate oder Organoaluminate, wobei diese Metallkatalysatoren insbesondere Alkoxygruppen, Aminoalkoxygruppen, Sulfonatgruppen, Carboxylgruppen, 1,3-Diketonatgruppen, 1,3-Ketoesteratgruppen, Dialkylphosphatgruppen oder Dialkylpyrophosphatgruppen aufweisen.

Besonders geeignete Organozinn-Verbindungen sind Dialkylzinnoxide, Dialkylzinndichloride, Dialkylzinndicarboxylate oder Dialkylzinndiketonate, insbesondere Dibutylzinnoxid, Dibutylzinndichlorid, Dibutylzinndiacetat, Dibutylzinndilaurat, Dibutylzinndiacetylacetonat, Dioctylzinnoxid, Dioctylzinndichlorid, Dioctylzinndiacetat, Dioctylzinndilaurat oder Dioctylzinndiacetylacetonat, sowie Alkylzinnthioester.

Besonders geeignete Organotitanate sind Bis(ethylacetoacetato)diisobutoxytitan(IV), Bis(ethylacetoacetato)diisopropoxy-titan(IV), Bis(acetylacetonato)-diisopropoxy-titan(IV), Bis(acetylacetonato)-diisobutoxy-titan(IV), Tris(oxy-ethyl)amin-isopropoxy-titan(IV), Bis[tris(oxyethyl)amin]-diisopropoxy-titan(IV), Bis(2-ethylhexan-1,3-dioxy)-titan(IV), Tris[2-((2-aminoethyl)amino)ethoxy]-ethoxy-titan(IV), Bis(neopentyl(diallyl)oxy-diethoxy-titan(IV), Titan(IV)-tetra-butanolat, Tetra-(2-ethylhexyloxy)titanat, Tetra-(isopropoxy)titanat oder Polybutyltitanat. Insbesondere geeignet sind die kommerziell erhältlichen Typen Tyzor^{®} AA, GBA, GBO, AA-75, AA-65, AA-105, DC, BEAT, BTP, TE, TnBT, KTM, TOT, TPT oder IBAY (alle von Dorf Ketal); Tytan PBT, TET, X85, TAA, ET, S2, S4 oder S6 (alle von Borica Company Ltd.) oder Ken-React^{®} KR^{®} TTS, 7, 9QS, 12, 26S, 33DS, 38S, 39DS, 44, 134S, 138S, 133DS, 158FS oder LICA^{®} 44 (alle von Kenrich Petrochemicals).

Besonders geeignete Organozirkonate sind die kommerziell erhältlichen Typen Ken-React^{®} NZ^{®} 38J, KZ^{®} TPPJ, KZ^{®} TPP, NZ^{®} 01, 09, 12 38, 44 oder 97 (alle von Kenrich Petrochemicals) oder Snapcure^{®} 3020, 3030, 1020 (alle von Johnson Matthey & Brandenberger).

Ein besonders geeignetes Organoaluminat ist der kommerziell erhältliche Typ K-Kat 5218 (von King Industries).

Als Beschleuniger geeignete stickstoffhaltige Verbindungen sind insbesondere Amine wie insbesondere N-Ethyldiisopropylamin, N,N,N',N'-Tetramethylalky-lendiamine, Polyoxyalkylenamine, 1,4-Diazabicyclo[2.2.2]octan; Amidine wie insbesondere 1,8-Diazabicyclo[5.4.0]undec-7-en (DBU), 1,5-Diazabicyclo-[4.3.0]non-5-en (DBN), 6-Dibutylamino-1,8-diazabicyclo[5.4.0]undec-7-en; Guanidine wie insbesondere Tetramethylguanidin, 2-Guanidinobenzimidazol, Acetylacetoneguanidin, 1,3-Di-o-tolylguanidin, 2-tert-Butyl-1,1,3,3-tetramethylguanidin oder Umsetzungsprodukte aus Carbodiimiden und Aminen wie insbesondere Polyetheraminen oder Aminosilanen; oder Imidazole wie insbesondere N-(3-Trimethoxysilylpropyl)-4,5-dihydroimidazol oder N-(3-Triethoxysilylpropyl)-4,5-dihydroimidazol.

Insbesondere geeignet sind auch Kombinationen verschiedener Beschleuniger für die Vernetzung von Silangruppen-haltigen Polymeren, insbesondere Kombinationen aus mindestens einem Metallkatalysator und mindestens einer stickstoffhaltigen Verbindung.

Bevorzugt sind Organozinn-Verbindungen, Organotitanate, Amine, Amidine, Guanidine oder Imidazole.

Als Beschleuniger geeignet sind weiterhin Substanzen, welche die Reaktion von Epoxidgruppen mit Aminogruppen beschleunigen. Dafür geeignet sind insbesondere Säuren oder zu Säuren hydrolysierbare Verbindungen, insbesondere organische Carbonsäuren wie Essigsäure, Benzoesäure, Salicylsäure, 2-Nitrobenzoesäure, Milchsäure, organische Sulfonsäuren wie Methansulfonsäure, p-Toluolsulfonsäure oder 4-Dodecylbenzolsulfonsäure, Sulfonsäureester, andere organische oder anorganische Säuren wie insbesondere Phosphorsäure, oder Mischungen der vorgenannten Säuren und Säureester; tertiäre Amine wie insbesondere 1,4-Diazabicyclo[2.2.2]octan, Benzyldimethylamin, α-Methylbenzyldimethylamin, Triethanolamin, Dimethyl-aminopropylamin, Imidazole wie insbesondere N-Methylimidazol, N-Vinylimidazol oder 1,2-Dimethylimidazol, Salze solcher tertiärer Amine, quaternäre Ammoniumsalze, wie insbesondere Benzyltrimethylammoniumchlorid, Amidine wie insbesondere 1,8-Diazabicyclo-[5.4.0]undec-7-en, Guanidine wie insbesondere 1,1,3,3-Tetramethylguanidin, Phenole, insbesondere Bisphenole, Phenol-Harze oder Mannich-Basen wie insbesondere 2-(Dimethylaminomethyl)phenol, 2,4,6-Tris(dimethylaminomethyl)phenol oder Polymere aus Phenol, Formaldehyd und N,N-Dimethyl-1,3-propandiamin, Phosphite wie insbesondere Di- oder Triphenylphosphite, oder Mercaptogruppen aufweisende Verbindungen. Bevorzugt sind Säuren, tertiäre Amine oder Mannich-Basen. Am meisten bevorzugt ist Salicylsäure oder 2,4,6-Tris(dimethylaminomethyl)phenol oder eine Kombination davon.

Als Weichmacher geeignet sind insbesondere Carbonsäureester wie Phthalate, insbesondere Diisononylphthalat (DINP), Diisodecylphthalat (DIDP) oder Di-(2-propylheptyl)phthalat (DPHP), hydrierte Phthalate, insbesondere hydriertes Diisononylphthalat (DINCH), Terephthalate, insbesondere Dioctylterephthalat, Trimellitate, Adipate, insbesondere Dioctyladipat (DOA), Azelate, Sebacate, Polyole, insbesondere Polyoxyalkylenpolyole oder Polyesterpolyole, Benzoate, Glykolether, Glykolester, organische Phosphor-, Phosphon- oder Sulfonsäureester, Polybutene, Polyisobutene oder von natürlichen Fetten oder Ölen abgeleitete Weichmacher, insbesondere epoxidiertes Soja- oder Leinöl. Bevorzugt ist DINP, DIDP oder DOA.

Geeignete Weichmacher sind weiterhin flammschützende Weichmacher, insbesondere organische Phosphorsäureester wie insbesondere Triethylphosphat, Trikresylphosphat, Triphenylphosphat, Diphenylkresylphosphat, Isodecyldiphenylphosphat, Tris(1,3-dichlor-2-propyl)phosphat, Tris(2-chlorethyl)phosphat, Tris(2-ethylhexyl)phosphat, Tris(chlorisopropyl)phosphat, Tris(chlorpropyl)phosphat, isopropyliertes Triphenylphosphat, Mono-, Bis- oder Tris(isopropylphenyl)phosphate unterschiedlichen Isopropylierungsgrades, Resorcinol- bis(diphenylphosphat) oder Bisphenol-A-bis(diphenylphosphat). Bevorzugt ist Diphenylkresylphosphat.

Bevorzugt enthält die Zusammensetzung einen Gehalt an Weichmachern im Bereich von 5 bis 30 Gewichts-%.

Bevorzugt liegt in der Zusammensetzung das Gewichtsverhältnis zwischen Silangruppen-haltigem Polymer und Weichmacher im Bereich von 90/10 bis 50/50, insbesondere 80/20 bis 50/50.

Weichmacher verbessern die Verarbeitbarkeit, erhöhen die Dehnbarkeit, erniedrigen das Elastizitätsmodul und vermindern gegebenenfalls die Brennbarkeit der Zusammensetzung

Die Zusammensetzung kann weitere gegenüber Epoxidgruppen reaktive Substanzen enthalten, insbesondere
- Monoamine wie Hexylamin oder Benzylamin oder Polyethermonoamine, insbesondere Alkohol-gestartete Typen wie Jeffamine^{®} M-600, Jeffamine^{®} M-1000, Jeffamine^{®} M-2005, Jeffamine^{®} M-2070, Jeffamine^{®} XTJ-581, Jeffamine^{®} XTJ-249 oder Jeffamine^{®} XTJ-435, oder Alkylphenol-gestartete Typen wie Jeffamine^{®} XTJ-436 (alle von Huntsman);
- aliphatische Polyamine mit einem Molekulargewicht unterhalb von 115 g/mol, insbesondere 1,2-Ethandiamin, 1,2-Propandiamin, 1,3-Propandiamin, 2,2-Dimethyl-1,3-propandiamin, 1,3-Pentandiamin (DAMP), 1,5-Pentandiamin, Bis(2-aminoethyl)ether, Diethylentriamin (DETA) oder 1,2- oder 1,3- oder 1,4-Diaminocyclohexan;
- Mannich-Basen erhalten aus der Umsetzung von Phenolen mit Aldehyden, insbesondere Formaldehyd, und aliphatischen oder cycloaliphatischen Aminen, insbesondere Phenalkamine, d.h. Mannich-Basen von Cardanol (langkettigen Alk(en)ylphenolen und -resorcinen gewonnen durch thermische Behandlung von Cashew-Schalenöl-Extrakten, enthaltend als Hauptkomponente 3-(Pentadeca-8,11,14-trienyl)phenol, insbesondere die kommerziellen Typen Cardolite^{®} NC-540, NC-557, NC-558, NC-566, Lite 2002, GX-6019, GX-6013, NX-4943, NX-5607 oder NX-5608 (von Cardolite), Aradur^{®} 3440, 3441, 3442 oder 3460 (von Huntsman) oder Beckopox^{®} EH 614, EH 621, EH 624, EH 628 oder EH 629 (von Cytec);
- aromatische Polyamine, wie insbesondere m- und p-Phenylendiamin, 4,4'-, 2,4' und/oder 2,2'-Diaminodiphenylmethan, 3,3'-Dichloro-4,4'-diaminodiphenylmethan (MOCA), 2,4- und/oder 2,6-Toluylendiamin, Mischungen von 3,5-Dimethylthio-2,4- und -2,6-toluylendiamin (erhältlich als Ethacure^{®} 300 von Albermarle), Mischungen von 3,5-Diethyl-2,4- und -2,6-toluylendiamin (DETDA, erhältlich als Ethacure^{®} 100 von Albermarle), 3,3',5,5'-Tetraethyl-4,4'-diaminodiphenylmethan (M-DEA), 3,3',5,5'-Tetraethyl-2,2'-dichloro-4,4'-diaminodiphenylmethan (M-CDEA), 3,3'-Diisopropyl-5,5'-dimethyl-4,4'-diaminodiphenylmethan (M-MIPA), 3,3',5,5'-Tetraisopropyl-4,4'-diaminodiphenylmethan (M-DIPA), 4,4'-Diaminodiphenylsulfon (DDS), 4-Amino-N-(4-aminophenyl)benzolsulfonamid, 5,5'-Methylendianthranilsäure, Dimethyl-(5,5'-me-thylendianthranilat), 1,3-Propylen-bis(4-aminobenzoat), 1,4-Butylen-bis(4-aminobenzoat), Polytetramethylenoxid-bis(4-aminobenzoat) (erhältlich als Versalink^{®} von Air Products), 1,2-Bis(2-aminophenylthio)ethan, 2-Methylpropyl-(4-chloro-3,5-diaminobenzoat) oder tert.Butyl-(4-chloro-3,5-diamino-benzoat);
- Polyamidoamine, insbesondere Umsetzungsprodukte aus einer ein- oder mehrwertigen Carbonsäure, beziehungsweise deren Ester oder Anhydride, insbesondere einer Dimerfettsäure, mit einem im stöchiometrischen Überschuss eingesetzten aliphatischen, cycloaliphatischen oder aromatischen Polyamin, insbesondere einem Polyalkylenamin wie beispielsweise DETA oder TETA, insbesondere die kommerziell erhältlichen Polyamidoamine Versamid^{®} 100, 125, 140 oder 150 (von Cognis), Aradur^{®} 223, 250 oder 848 (von Huntsman), Euretek^{®} 3607 oder 530 (von Huntsman) oder Beckopox^{®} EH 651, EH 654, EH 655, EH 661 oder EH 663 (von Cytec);
- Addukte von Polyaminen mit Epoxiden oder Epoxidharzen, insbesondere Addukte mit Diepoxiden im Molverhältnis von ungefähr 2/1, oder Addukte mit Monoepoxiden im Molverhältnis von ungefähr 1/1, oder Umsetzungsprodukte aus Polyaminen und Epichlorhydrin, insbesondere jenes von 1,3-Bis(aminomethyl)benzol, kommerziell erhältlich als Gaskamine^{®} 328 (von Mitsubishi Gas Chemical);
- flüssige Mercaptan-terminierte Polysulfid-Polymere, bekannt unter dem Markennamen Thiokol^{®} (von Morton Thiokol; beispielsweise erhältlich von SPI Supplies, oder von Toray Fine Chemicals), insbesondere die Typen LP-3, LP-33, LP-980, LP-23, LP-55, LP-56, LP-12, LP-31, LP-32 oder LP-2; sowie weiterhin bekannt unter dem Markennamen Thioplast^{®} (von Akzo Nobel), insbesondere die Typen G 10, G 112, G 131, G 1, G 12, G 21, G 22, G 44 oder G 4;
- Mercaptan-terminierte Polyoxyalkylen-Ether, erhältlich beispielsweise durch Umsetzung von Polyoxyalkylendi- oder -triolen entweder mit Epichlorhydrin oder mit einem Alkylenoxid, gefolgt von Natriumhydrogensulfid;
- Mercaptan-terminierte Verbindungen in Form von Polyoxyalkylen-Derivaten, bekannt unter dem Markennamen Capcure^{®} (von Cognis), insbesondere die Typen WR-8, LOF oder 3-800;
- Polyester von Thiocarbonsäuren, beispielsweise Pentaerythritoltetramercaptoacetat, Trimethylolpropantrimercaptoacetat, Glykoldimercaptoacetat, Pentaerythritoltetra-(3-mercaptopropionat), Trimethylolpropantri(3-mercaptopropionat) oder Glykoldi-(3-mercaptopropionat), oder Veresterungsprodukte von Polyoxyalkylendiolen oder -triolen, ethoxyliertem Trimethylolpropan oder Polyester-Diolen mit Thiocarbonsäuren wie Thioglykolsäure oder 2- oder 3-Mercaptopropionsäure; oder
- weitere Mercaptogruppen aufweisende Verbindungen, wie insbesondere 2,4,6-Trimercapto-1,3,5-triazin, 2,2'-(Ethylendioxy)-diethanthiol (Triethylenglykol-dimercaptan) oder Ethandithiol.

Weitere geeignete Bestandteile der Zusammensetzung sind insbesondere die folgenden Hilfs- und Zusatzmittel:
- Haftvermittler und/oder Vernetzer, insbesondere (Meth)acrylosilane, Anhydridosilane, Carbamatosilane, Alkylsilane oder Iminosilane, oder oligomere Formen dieser Silane, oder Addukte aus primären Aminosilanen mit Epoxysilanen oder (Meth)acrylosilanen oder Anhydridosilanen;
- Lösemittel, Verdünner oder Extender, wie insbesondere Xylol, 2-Methoxyethanol, Dimethoxyethanol, 2-Ethoxyethanol, 2-Propoxyethanol, 2-Isopropoxyethanol, 2-Butoxyethanol, 2-Phenoxyethanol, 2-Benzyloxyethanol, Benzylalkohol, Ethylenglykol, Ethylenglykoldimethylether, Ethylenglykoldiethylether, Ethylenglykoldibutylether, Ethylenglykoldiphenylether, Diethylenglykol, Diethylenglykol-monomethylether, Diethylenglykol-monoethylether, Diethylenglykol-mono-n-butylether, Diethylenglykoldimethylether, Diethylenglykoldiethylether, Diethylenglykoldi-n-butylylether, Propylenglykolbutylether, Propylenglykolphenylether, Dipropylenglykol, Dipropylenglykolmonomethylether, Dipropylenglykoldimethylether, Dipropylenglykoldi-n-butylether, N-Methylpyrrolidon, Diphenylmethan, Diisopropylnaphthalin, Erdölfraktionen wie zum Beispiel Solvesso^{®}-Typen (von Exxon), Alkylphenole wie tert.Butylphenol, Nonylphenol, Dodecylphenol und Cardanol (aus Cashew-Schalen-Öl, enthaltend als Hauptbestandteil 3-(8,11,14-Pentadecatrienyl)phenol), styrolisiertes Phenol, Bisphenole, aromatische Kohlenwasserstoffharze, insbesondere Phenolgruppen-haltige Typen, alkoxyliertes Phenol, insbesondere ethoxyliertes oder propoxyliertes Phenol, insbesondere 2-Phenoxyethanol, Adipate, Sebacate, Phthalate, Benzoate, organische Phosphor- oder Sulfonsäureester oder Sulfonamide;
- Reaktivverdünner, insbesondere Reaktivverdünner für Epoxidharze wie Kresylglycidylether, Benzylglycidylether, tert.Butylphenylglycidylether, Nonylphenylglycidylether, 2-Ethylhexylglycidylether, Glycidylether von natürlichen Alkoholen wie insbesondere C₈- bis C₁₀-Alkylglycidylether oder C₁₂- bis C₁₄-Alkylglycidylether oder Glycidylether von Di- oder Polyolen wie Polypropylenglykolen, Dimethylolcyclohexan, Glycerin, Neopentylglykol oder Trimethylolpropan, oder weiterhin epoxidierte natürliche Öle wie Sojaöl, Leinöl oder Palmkernöl, oder Acetoacetatgruppen aufweisende Verbindungen, insbesondere acetoacetylierte Polyole, oder Butyrolacton oder Carbonate oder Aldehyde oder Isocyanate oder Reaktivgruppen-aufweisende Silikone;
- anorganische oder organische Füllstoffe, insbesondere gemahlene oder gefällte Calciumcarbonate, welche gegebenenfalls mit Fettsäuren, insbesondere Stearaten, beschichtet sind, Baryt (Schwerspat), Talk, Quarzmehl, Quarzsand, Eisenglimmer, Dolomit, Wollastonit, Kaolin, Mica (Kalium-Aluminium-Silikat), Molekularsieb, Aluminiumoxid, Aluminiumhydroxid, Magnesiumhydroxid, Kieselsäure, Zement, Gips, Flugasche, Russ, Graphit, MetallPulver wie Aluminium, Kupfer, Eisen, Zink, Silber oder Stahl, PVC-Pulver oder Hohlkugeln;
- Fasern, insbesondere Glasfasern, Kohlefasern, Metallfasern, Keramikfasern, Polymerfasern wie Polyamidfasern oder Polyethylenfasern, oder Naturfasern wie Wolle, Cellulose, Hanf oder Sisal;
- anorganische oder organische Pigmente, insbesondere Titandioxid, Chromoxid oder Eisenoxid;
- Farbstoffe;
- Rheologie-Modifizierer, insbesondere Verdickungsmittel, insbesondere Schichtsilikate wie Bentonite, Derivate von Rizinusöl wie hydriertes Rizinusöl, Polyamide, Polyurethane, Harnstoffverbindungen, Polyvinylchloride, pyrogene Kieselsäuren;
- natürliche Harze, Fette oder Öle wie Kolophonium, Schellack, Leinöl, Rizinusöl oder Sojaöl;
- nicht-reaktive Polymere, insbesondere Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere Polyethylene (PE), Polypropylene (PP), Polyisobutylene, Ethylenvinylacetat-Copolymere (EVA) oder ataktische Poly-α-Olefine (APAO);
- flammhemmende Substanzen, insbesondere die bereits genannten Füllstoffe Aluminiumhydroxid oder Magnesiumhydroxid, Bor-Verbindungen, Antimontrioxid, Phosphor oder die bereits genannten flammhemmenden Weichmacher; oder
- Additive, insbesondere Netzmittel, Verlaufmittel, Entschäumer, Entlüfter, Stabilisatoren gegen Oxidation, Wärme, Licht oder UV-Strahlung oder Biozide.

Es kann sinnvoll sein, gewisse Bestandteile vor dem Einmischen in die Zusammensetzung chemisch oder physikalisch zu trocknen, insbesondere wenn sie zusammen mit dem Silangruppen-haltigen Polymer gelagert werden sollen.

Im Fall einer zweikomponentigen Zusammensetzungen können solche weitere Bestandteile als Bestandteil der ersten oder der zweiten Komponente vorhanden sein. Freies Wasser liegt bevorzugt nicht in der gleichen Komponente wie das Silangruppen-haltige Polymer vor. Gegenüber Epoxidgruppen reaktive weitere Bestandteile sind bevorzugt nicht in der gleichen Komponente wie das Epoxidharz.

Die Zusammensetzung enthält zusätzlich mindestens einen aromatischen Verdünner mit einem Siedepunkt von mindestens 180 °C, insbesondere mindestens 200 °C. Ein solcher Verdünner kann die Verarbeitbarkeit der Zusammensetzung verbessern und ermöglicht gute mechanische Eigenschaften der ausgehärteten Zusammensetzung, insbesondere eine hohe Zugfestigkeit und Weiterreissfestigkeit bei hoher Dehnbarkeit.

Bei dem aromatischen Verdünner mit einem Siedepunkt von mindestens 180 °C, insbesondere mindestens 200 °C, handelt es sich um 2-Phenoxyethanol, 2-Benzyloxyethanol, Benzylalkohol, Ethylenglykoldiphenylether, Propylenglykolphenylether, N-Ethylpyrrolidon, Diphenylmethanol, Diisopropylnaphthalin, Erdölfraktionen wie zum Beispiel Solvesso^{®}-Typen (von Exxon), Cardanol, styrolisiertes Phenol, Bisphenole, Phenolgruppen-haltige Kohlenwasserstoffharze, oder ethoxyliertes oder propoxyliertes Phenol.

Als aromatischer Verdünner besonders bevorzugt ist Diisopropylnaphthalin und/oder Benzylalkohol und/oder Cardanol, insbesondere Benzylalkohol. Damit werden flüssig applizierte Abdichtungsfolien mit hervorragender Verarbeitbarkeit, schneller Aushärtung, hoher Zugfestigkeit und Weiterreissfestigkeit, hoher Dehnbarkeit und optisch einwandfreier Filmqualität erhalten. Insbesondere enthält die Zusammensetzung einen Gehalt an aromatischem Verdünner mit einem Siedepunkt von mindestens 180 °C, insbesondere mindestens 200 °C, insbesondere Benzylalkohol und/oder Cardanol, im Bereich von 1 bis 30 Gewichts-%, bevorzugt 2 bis 20 Gewichts-%, insbesondere 2 bis 15 Gewichts-%.

In einem weiteren bevorzugten Aspekt der Erfindung enthält die Zusammensetzung zusätzlich mindestens einen Reaktivverdünner, welcher mindestens eine Epoxidgruppe aufweist. Bevorzugt ist ein solcher Reaktivverdünner in der gleichen Komponente enthalten wie das Epoxid-Flüssigharz.

Als Reaktivverdünner geeignet sind insbesondere die Glycidylether von ein- oder mehrwertigen Phenolen oder aliphatischen oder cycloaliphatischen Alkoholen, insbesondere 1,4-Butandiol-Diglycidylether, 1,6-Hexandiol-Diglycidylether, die Glycidylether von Glycerol, Polyglycerol oder Trimethylolpropan, Phenylglycidylether, Kresylglycidylether, Guaiacolglycidylether, 4-Methoxyphenylglycidylether, p-n-Butylphenylglycidylether, p-tert.Butylphenylglycidylether, 4-Nonylphenylglycidylether, 4-Dodecylphenylglycidylether, Cardanolglycidylether, Benzylglycidylether, Allylglycidylether, Butylglycidylether, Hexylglycidylether, 2-Ethylhexylglycidylether oder die Glycidylether von natürlichen Alkoholen wie insbesondere C₈- bis C₁₀-, C₁₂- bis C₁₄- oder C₁₃- bis C₁₅-Alkylglycidylether.

Bevorzugt enthält die Zusammensetzung mindestens einen Alkylglycidylether, insbesondere einen C₈- bis C₁₀-, C₁₂- bis C₁₄- oder C₁₃- bis C₁₅-Alkylglycidylether. Eine solche Zusammensetzung ermöglicht Abdichtungsfolien mit besonders hoher Dehnbarkeit.

In der Zusammensetzung liegt das Verhältnis zwischen der Anzahl von gegenüber Epoxidgruppen reaktiven Gruppen gegenüber der Anzahl Epoxidgruppen bevorzugt im Bereich von 0.5 bis 1.5, besonders bevorzugt in Bereich von 0.8 bis 1.2, insbesondere im Bereich von 0.9 bis 1.2.

Die Zusammensetzung enthält bevorzugt nur einen geringen Gehalt an Lösemitteln. Sie enthält bevorzugt 200 g VOC pro Liter oder weniger, insbesondere 150 g VOC pro Liter oder weniger, besonders bevorzugt 100 g VOC pro Liter oder weniger, ganz besonders bevorzugt 50 g VOC pro Liter oder weniger. Insbesondere ist sie weitgehend frei von Lösemitteln.

Für die Verwendung als Abdichtungsfolie wird die Zusammensetzung bevorzugt als zwei- oder dreikomponentige Zusammensetzung hergestellt und eingesetzt. Dabei werden die erste, die zweite und gegebenenfalls die dritte Komponente der Zusammensetzung getrennt voneinander hergestellt, wobei die Bestandteile der jeweiligen Komponente unter Ausschluss von Feuchtigkeit miteinander vermischt werden, so dass eine makroskopisch homogene Mischung entsteht. Jede Komponente wird in einem separaten feuchtigkeitsdichten Gebinde gelagert. Ein geeignetes Gebinde ist insbesondere ein Fass, ein Container, ein Hobbock, ein Eimer, eine Dose, ein Beutel, ein Kanister oder eine Flasche. Jede Komponente für sich ist lagerstabil, kann also vor ihrer Anwendung während mehreren Monaten bis zu einem Jahr und länger im jeweiligen Gebinde aufbewahrt werden, ohne dass sich ihre Eigenschaften in einem für ihren Gebrauch relevanten Ausmass verändern.

Bei der Anwendung werden die Komponenten kurz vor oder während der Applikation miteinander vermischt. Das Mischungsverhältnis wird bevorzugt so gewählt, dass die gegenüber Epoxidgruppen reaktiven Gruppen in einem geeigneten Verhältnis zur Anzahl Epoxidgruppen stehen, wie vorgängig beschrieben. Bei einer zweikomponentigen Zusammensetzung liegt das Mischungsverhältnis zwischen der ersten und der zweiten Komponente in Gewichtsteilen typischerweise im Bereich von etwa 10:1 bis 1:10.

Das Vermischen der Komponenten erfolgt mittels eines geeigneten Rührwerkes, beispielsweise eines Doppelwellenmischers, wobei die einzelnen Komponenten geeigneterweise im richtigen Mischungsverhältnis vorkonfektioniert sind. Ebenfalls möglich ist eine kontinuierliche maschinelle Verarbeitung mittels einer Mehrkomponenten-Dosieranlage mit statischer oder dynamischer Vermischung der Komponenten. Beim Mischen ist darauf zu achten, dass die Komponenten möglichst homogen vermischt werden. Bei einer unzureichenden Vermischung treten lokale Abweichungen vom vorteilhaften Mischungsverhältnis auf, was sich in einer Verschlechterung der mechanischen Eigenschaften auswirken kann. Wird vor der Applikation vermischt, so muss darauf geachtet werden, dass zwischen dem Vermischen der Komponenten und der Applikation nicht zu viel Zeit vergeht, da es dadurch zu Störungen, wie beispielsweise einem schlechten Verlauf oder einem verlangsamten oder unvollständigen Aufbau der Haftung zum Substrat, kommen kann. Das Vermischen erfolgt insbesondere bei Umgebungstemperatur, welche typischerweise im Bereich von etwa 5 bis 50 °C, bevorzugt bei etwa 10 bis 35 °C, liegt.

Mit dem Vermischen der Komponenten beginnt die Aushärtung durch chemische Reaktion. Dabei reagieren die Epoxidgruppen mit primären und sekundären Aminogruppen unter Ringöffnung zu Aminoalkohol-Einheiten. Weitere Epoxidgruppen reagieren mit sich selbst unter anionischer Polymerisation. Die Silangruppen hydrolysieren unter Freisetzung von Alkohol, wobei Silanolgruppen (Si-OH-Gruppen) und durch nachfolgende Kondensationsreaktionen Siloxangruppen (Si-O-Si-Gruppen) gebildet werden. Als Ergebnis dieser und gegebenenfalls weiterer Reaktionen härtet die Zusammensetzung zu einem vernetzten Kunststoff aus. Falls das Wasser für die Hydrolyse der Silangruppen nicht bereits in der Zusammensetzung vorhanden war oder in dieser freigesetzt wurde, kann es aus der Luft (Luftfeuchtigkeit) oder einem Substrat stammen, oder die Zusammensetzung kann mit einer Wasser enthaltenden Komponente in Kontakt gebracht werden, zum Beispiel durch Bestreichen, Besprühen oder Einmischen.

Die Aushärtung erfolgt typischerweise bei Umgebungstemperatur, wobei sie sich typischerweise über einige Tage bis Wochen erstreckt, bis sie unter den gegebenen Bedingungen weitgehend abgeschlossen ist. Bevorzugt verläuft die Aushärtung so, dass sowohl eine ausreichende Topf- bzw. Offenzeit als auch eine schnelle Aushärtung gewährleistet sind, damit die Zusammensetzung ordnungsgemäss appliziert werden kann und möglichst bald nach der Applikation klebefrei wird, so dass sie begehbar ist und gegebenenfalls weiter bearbeitet werden kann.

Ein weiterer Gegenstand der Erfindung ist somit eine ausgehärtete Zusammensetzung bzw. Abdichtungsfolie, erhalten aus der beschriebenen Verwendung durch Vermischen aller Inhaltsstoffe bzw. Komponenten der Zusammensetzung, der Applikation der vermischten Zusammensetzung und deren Aushärtung.

Bei der Applikation wird die frisch vermischte, noch flüssige Zusammensetzung innerhalb ihrer Offenzeit als Beschichtung bzw. Abdichtungsfolie auf eine ebene oder leicht geneigte Fläche appliziert, typischerweise indem sie auf ein Substrat gegossen und anschliessend flächig bis zur erwünschten Schichtdicke verteilt wird, beispielsweise mittels einer Rolle, einem Schieber, einer Zahntraufel oder einer Spachtel.

Als "Offenzeit" oder auch "Topfzeit" wird dabei die Zeitspanne zwischen dem Vermischen der Komponenten und dem Zeitpunkt, an dem Zusammensetzung nicht mehr ordnungsgemäss applizierbar ist, bezeichnet. Ein typisches Mass für das Ende der Topfzeit ist das Erreichen eines bestimmten Viskositätswerts.

Bevorzugt weist die frisch vermischte Zusammensetzung eine Viskosität bei 20 °C im Bereich von 0.5 bis 15 Pa·s, bevorzugt 0.5 bis 10 Pa·s, insbesondere 0.5 bis 5 Pa·s, auf. So kann sie als flüssig applizierbare Abdichtungsfolie gut verarbeitet werden. Sie ist bevorzugt selbstnivellierend, d.h. sie verläuft selbständig zu einer ebenen Oberfläche, nachdem sie mittels Rolle, Zahntraufel, Stachelwalze oder dergleichen bearbeitet wurde.

In einem Arbeitsgang wird typischerweise eine Schichtdicke im Bereich von 0.5 bis 3 mm, insbesondere 0.75 bis 2.5 mm, aufgetragen.

Die Zusammensetzung kann auf unterschiedliche Substrate appliziert werden, wobei bei der Aushärtung die Abdichtungsfolie in Form einer elastischen Beschichtung entsteht, welche den Untergrund vor dem Eindringen von Wasser schützt.

Die Zusammensetzung bzw. die Abdichtungsfolie kann in einer oder mehreren Schichten aufgetragen werden. Darauf können eine oder mehrere Deckbeschichtungen aufgetragen werden. Als oberste bzw. letzte Schicht kann eine Versiegelung appliziert werden.

Als "Versiegelung" wird dabei eine transparente oder pigmentierte, hochwertige Beschichtung bezeichnet, welche als oberste dünne Schicht auf eine Beschichtung appliziert wird. Sie schützt und veredelt deren Oberfläche und verschliesst noch vorhandene Poren. Die Schichtdicke einer Versiegelung (im trockenen

Zustand) liegt typischerweise im Bereich von 0.03 bis 0.3 mm.

Die Versiegelung bietet einen zusätzlichen Schutz vor UV-Licht, Oxidation oder mikrobiellem Bewuchs, bietet ästhetische Gestaltungsmöglichkeiten, schützt die Beschichtung vor mechanischen Verletzungen, verhindert das Anschmutzen und/oder vereinfacht die Reinigung.

Bevorzugt weist die Zusammensetzung im ausgehärteten Zustand bei Raumtemperatur eine Zugfestigkeit im Bereich von 2 bis 15 MPa, bevorzugt 3 bis 12 MPa, insbesondere 4 bis 12 MPa, auf.

Bevorzugt weist die Zusammensetzung im ausgehärteten Zustand bei Raumtemperatur eine Bruchdehnung von mindestens 50 %, bevorzugt mindestens 70 %, insbesondere mindestens 80 %, besonders bevorzugt mindestens 100 %, am meisten bevorzugt mindestens 200 %, auf.

Bevorzugt weist die Zusammensetzung im ausgehärteten Zustand bei Raumtemperatur ein Elastizitätsmodul im Bereich von 0.5 bis 5 % Dehnung von höchstens 15 MPa, bevorzugt höchstens 10 MPa, auf.

Bevorzugt weist die Zusammensetzung im ausgehärteten Zustand bei Raumtemperatur eine Weiterreissfestigkeit von mindestens 3 MPa, bevorzugt mindestens 4 MPa, insbesondere mindestens 5 MPa, auf.

Besonders bevorzugt weist die Zusammensetzung im ausgehärteten Zustand bei Raumtemperatur eine Zugfestigkeit von mindestens 2 MPa, eine Bruchdehnung von mindestens 100 %, insbesondere mindestens 200 %, und eine Weiterreissfestigkeit von mindestens 3 MPa, bevorzugt mindestens 4 MPa, insbesondere mindestens 4.5 MPa, auf.

Ganz besonders bevorzugt ist dabei der Wert für die Weiterreissfestigkeit höher, gleich hoch oder nur wenig tiefer als der Wert für das Elastizitätsmodul im Bereich von 0.5 bis 5 % Dehnung.

Dabei sind die Zugfestigkeit, die Bruchdehnung, das Elastizitätsmodul oder die Weiterreissfestigkeit an einem freien Film mit einer Schichtdicke von 2 mm, wie in den Beispielen beschrieben, bestimmt.

Ein solches Material ist aufgrund seiner mechanischen Eigenschaften besonders gut geeignet als Abdichtungsfolie.

Die flüssig applizierte Zusammensetzung bzw. Abdichtungsfolie kann eingesetzt werden zur Abdichtung von Dächern, insbesondere Flachdächern oder schwach geneigten Dachflächen, Dachterrassen oder Dachgärten, aber auch von Pflanzgefässen, Balkonen, Terrassen, Plätzen oder Gebäudefundamenten, oder im Innern von Gebäuden zur Wasserabdichtung, beispielsweise unter Fliesen oder Keramikplatten in Nasszellen, Küchen, Industriehallen oder Fabrikationsräumen. Sie kann auch zu Reparaturzwecken verwendet werden, beispielsweise auf undichten Dachmembranen.

Bevorzugt wird sie eingesetzt auf einem Dach, insbesondere einem Flachdach oder schwach geneigten Dach. Sie kann zum Abdichten auf einem neuen Dach oder zu Reparaturzwecken eingesetzt werden. Besonders geeignet ist die Abdichtungsfolie auch für Detailarbeiten, wie beispielsweise verwinkelte Geometrien, durchstossende Rohre oder Aufbauten wie zum Beispiel Photovoltaik-Anlagen, Photothermie-Anlagen oder Klimaanlagen, auf einem abzudichtenden Dach.

Bevorzugt wird die Zusammensetzung bzw. Abdichtungsfolie verwendet in einem Dachabdichtungssystem, umfassend
- gegebenenfalls einen Primer und/oder eine Grundierung und/oder eine Reparatur- oder Nivelliermasse,
- mindestens eine Schicht der beschriebenen Zusammensetzung in einer Schichtdicke von 0.5 bis 3 mm, gegebenenfalls in Kombination mit einer mechanischen Verstärkung,
- gegebenenfalls eine Deckbeschichtung und/oder Versiegelung.

Als mechanische Verstärkung geeignet ist insbesondere ein Armierungsgewebe wie insbesondere ein Kunststoffgitter oder Fasern oder eine Vliesmatte, insbesondere eine gewobene Polyester-Vliesmatte oder eine Vliesmatte aus nicht-gewobenen Polyesterfasern oder nicht-gewobenen Glasfasern.

Für den Fall, dass eine mechanische Verstärkung in Form eines Armierungsgewebes oder einer Vliesmatte verwendet wird, wird dieses bevorzugt auf die frisch applizierte erste Schicht der Zusammensetzung verlegt und innerhalb der Offenzeit der Zusammensetzung in diese eingearbeitet, beispielsweise mittels einer Rolle oder Bürste. Nach dem Aushärten der Zusammensetzung mit der eingearbeiteten mechanischen Verstärkung kann darauf eine weitere Schicht der Zusammensetzung und/oder eine Deckbeschichtung und/oder eine Versiegelung appliziert werden.

Für den Fall, dass Fasern verwendet werden, können diese in die flüssige Zusammensetzung vor deren Applikation eingemischt werden oder sie können in die applizierte Zusammensetzung eingestreut werden, solange diese noch flüssig ist.

Geeignete Substrate, auf welche die Zusammensetzung bzw. Abdichtungsfolie appliziert werden kann, sind insbesondere
- Beton, Leichtbeton, Mörtel, Backstein, Ziegel, Dachziegel, Schiefer, Gips, Anhydrid oder Naturstein wie Granit oder Marmor;
- Reparatur- oder Nivelliermasse auf Basis PCC (Polymer-modifizierter Zementmörtel) oder ECC (Epoxidharz-modifizierter Zementmörtel);
- Metalle und Legierungen wie Aluminium, Kupfer, Eisen, Stahl, Buntmetalle, inklusive oberflächenveredelte Metalle und Legierungen wie verzinkte oder verchromte Metalle;
- Asphalt oder Bitumen;
- Kunststoffe wie PVC, ABS, PC, PA, Polyester, PMMA, SAN, Epoxidharze, Phenolharze, PUR, POM, PO, PE, PP, EPM oder EPDM, jeweils unbehandelt oder oberflächenbehandelt mittels Plasma, Corona oder Flammen; insbesondere PVC-, PO- (FPO, TPO) oder EPDM-Folien;
- Isolierschäume, insbesondere aus EPS, XPS, PUR, PIR, Steinwolle, Glaswolle oder geschäumtem Glas (Foamglas);
- beschichtete Substrate wie lackierte Fliesen, gestrichener Beton oder pulverbeschichtete Metalle.

Die Substrate können bei Bedarf vor dem Applizieren der Zusammensetzung bzw. Abdichtungsfolie vorbehandelt werden, beispielsweise durch physikalische und/oder chemische Reinigungsverfahren, beispielsweise Schleifen, Sandstrahlen, Kugelstrahlen, Bürsten, Absaugen oder Abblasen, Hoch- oder Höchstdruckwasserstrahlen und/oder durch Behandeln mit Reinigern oder Lösemitteln und/oder das Aufbringen eines Haftvermittlers, einer Haftvermittlerlösung oder eines Primers.

Bei der Applikation und Aushärtung der Zusammensetzung bzw. Abdichtungsfolie entsteht ein Artikel, welcher mit der beschriebenen Zusammensetzung abgedichtet oder beschichtet ist. Beim Artikel handelt es sich insbesondere um ein Bauwerk, insbesondere ein Bauwerk des Hoch- oder Tiefbaus.

Die beschriebene Verwendung zeichnet sich durch vorteilhafte Eigenschaften aus. Die flüssig applizierbare Zusammensetzung bzw. Abdichtungsfolie ist weitgehend geruchlos und in Form einer zwei- oder dreikomponentigen Zusammensetzung lagerstabil. Bei der Anwendung lassen sich die Komponenten gut miteinander vermischen, wobei das vermischte Material eine niedrige Viskosität und eine genügend lange Offenzeit aufweist, dass es von Hand als selbstverlaufende Folie bzw. Beschichtung applizierbar ist. Die Zusammensetzung bzw. Abdichtungsfolie härtet bei Umgebungsbedingungen schnell und zuverlässig zu einem elastischen Material mit hoher Festigkeit, Dehnbarkeit und Weiterreissfestigkeit bei nicht allzu hohem Elastizitätsmodul. Aufgrund der Tatsache, dass die Zusammensetzung bzw. Abdichtungsfolie frei von Lösemitteln formuliert werden kann und keine Spuren von monomeren Isocyanaten aufweist, ist sie wenig toxisch und benötigt somit für die sichere Verwendung keine speziellen Schutzmassnahmen.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.
"AHEW" steht für das Aminwasserstoff-Equivalentgewicht.
"EEW" steht für das Epoxid-Equivalentgewicht.

Als "Normklima" wird eine Temperatur von 23±1 °C und eine relative Luftfeuchtigkeit von 50±5% bezeichnet. "NK" steht für "Normklima".

### Beschreibung der Messmethoden:

Die **Viskosität** wurde auf einem thermostatisierten Kegel-Platten-Viskosimeter Rheotec RC30 (Kegeldurchmesser 25 mm, Kegelwinkel 1°, Kegelspitze-Platten-Abstand 0.05 mm, Scherrate 10 U/min) bestimmt.

Die **Aminzahl** wurde durch Titration bestimmt (mit 0.1 N HClO₄ in Essigsäure gegen Kristallviolett).

### Verwendete Silangruppen-haltige Polymere:

### STP Polymer-1:

Unter Feuchtigkeitsausschluss wurden 1000 g Polyol Acclaim^{®} 12200 (von Covestro; low monol Polyoxypropylendiol, OH-Zahl 11.0 mg KOH/g, Wassergehalt ca. 0.02 Gew.-%), 43.6 g Isophorondiisocyanat (Vestanat^{®} IPDI von Evonik Industries), 126.4 g Diisodecylphthalat und 0.12 g Dibutylzinndilaurat unter stetigem Rühren auf 90°C aufgeheizt und auf dieser Temperatur belassen, bis der titrimetrisch bestimmte Gehalt an freien Isocyanatgruppen einen Wert von 0.63 Gew.-% erreicht hatte. Anschliessend wurden 62.3 g N-(3-Trimethoxysilylpropyl)aminobernsteinsäurediethylester eingemischt und die Mischung bei 90°C solange gerührt, bis mittels FT-IR-Spektroskopie kein freies Isocyanat mehr nachgewiesen wurde. Das silanfunktionelle Polymer wurde auf Raumtemperatur abgekühlt und unter Ausschluss von Feuchtigkeit aufbewahrt.

Es war bei Raumtemperatur flüssig und wies eine Viskosität bei 20 °C von 99 Pa·s auf.

Das STP Polymer-1 enthält 10 Gewichts-% Weichmacher (Diisodecylphthalat).

### MS Polymer^{™} S303H:

Silangruppen-haltiges Polymer aus der Umsetzung von Allylgruppen-haltigen Polyethern mit Hydrosilanen (Hydrosilylierung), welches frei ist von Urethan- und/oder Harnstoffgruppen (von Kaneka Corp.).

### Verwendete weitere Substanzen:

| | |
|---|---|
| Araldite^{®} GY 250: | Bisphenol-A-Diglycidylether, EEW 187.5 g/Eq (von Huntsman) |
| Araldite^{®} PY 302-2: | Bisphenol-A/F-Diglycidylether, EEW 173.5 g/Eq (von Hunts-man) |
| Araldite^{®} DY E: | Monoglycidylether von C₁₂- bis C₁₄-Alkoholen, EEW ca. 290 g/Eq (von Huntsman) |
| Jeffamine^{®} D-400: | Polyetherdiamin mit mittlerem Molekulargewicht von 430 g/mol, AHEW 115 g/Eq (von Huntsman) |
| Vestamin^{®} TMD: | 2,2(4),4-Trimethylhexamethylendiamin, AHEW 39.6 g/Eq (von Evonik) |
| N-Benzyl-1,2-pro-pandiamin: | hergestellt wie nachfolgend beschrieben, AHEW 54.8 g/Eq |
| Gaskamine^{®} 240: | Styrolisiertes 1,3-Bis(aminomethyl)benzol, AHEW 103 g/Eq (von Mitsubishi Gas Chemical) |
| Dytek^{®} A: | 1,5-Diamino-2-methylpentan, AHEW 29.0 g/Eq (von Invista) |
| Vestamin^{®} IPD: | 3-Aminomethyl-3,5,5-trimethylcyclohexylamin, AHEW 42.6 g/Eq (von Evonik) |
| MXDA: | 1,3-Bis(aminomethyl)benzol, AHEW 34.0 g/Eq (von Mitsubishi Gas Chemical) |
| 1,3-BAC: | 1,3-Bis(aminomethyl)cyclohexan, AHEW 35.5 g/Eq (von Mitsubishi Gas Chemical) |
| TEPA: | Tetraethylenpentamin (TEPA), AHEW ca. 30 g/Eq (technisch, von Huntsman) |
| CeTePox^{®} 0214 H: | Umsetzungsprodukt aus 2,2(4),4-Trimethylhexamethylendiamin und Acrylnitril, AHEW 70 g/Eq (von CTP) |
| Silquest^{®} A-1120: | N-(2-Aminoethyl)-3-aminopropyltrimethoxysilan, AHEW 74.1 g/Eq (von Momentive) |
| DBTDL 10%: | Dibutylzinn(IV)dilaurat, 10 Gewichts-% in Diisodecylphthalat |
| Ancamine^{®} K54: | 2,4,6-Tris(dimethylaminomethyl)phenol (von Air Products) |
| Cardanol: | Cardolite^{®} NX-2026 von Cardolite Corp. |
| Rütasolv DI: | Diisopropylnaphthalin, Isomerengemisch (von Rütgers) |

### N-Benzyl-1,2-propandiamin:

In einem Rundkolben wurden 444.8 g (6 mol) 1,2-Propandiamin unter Stickstoffatmosphäre bei Raumtemperatur vorgelegt. Unter gutem Rühren wurde langsam eine Lösung aus 212.2 g (2 mol) Benzaldehyd in 1'500 ml Isopropanol dazugetropft und 2 Stunden nachgerührt. Die Reaktionsmischung wurde anschliessend bei einem Wasserstoff-Druck von 90 bar, einer Temperatur von 85 °C und einem Fluss von 5 ml/min auf einer kontinuierlich arbeitenden Hydrierapparatur mit Pd/C-Festbettkatalysator hydriert. Zur Reaktionskontrolle wurde mittels IR-Spektroskopie überprüft, ob die Iminbande bei ca. 1665 cm⁻¹ verschwunden war. Darauf wurde die hydrierte Lösung am Rotationsverdampfer bei 65 °C eingeengt, wobei unreagiertes 1,2-Propandiamin und Isopropanol entfernt wurden. Es wurde eine klare, leicht gelbliche Flüssigkeit erhalten. Davon wurden 300 g bei 80 °C unter Vakuum destilliert, wobei 237.5 g Destillat bei einer Dampftemperatur von 60 bis 63 °C und 0.08 bis 0.09 bar aufgefangen wurden. Erhalten wurde eine farblose Flüssigkeit mit einer Aminzahl von 682 mg KOH/g, welche gemäss ¹H-NMR eine Mischung aus N¹-Benzyl-1,2-propandiamin und N²-Benzyl-1,2-propandiamin im Verhältnis von ca. 2/1 darstellte und eine GC-Reinheit von >97% aufwies.

### Herstellung von Abdichtungsfolien:

Für jede Abdichtungsfolie wurden die in den Tabellen 1 bis 4 angegebenen Inhaltsstoffe in den angegebenen Mengen (in Gewichtsteilen) der Komponente-1 mittels eines Zentrifugalmischers (SpeedMixer^{™} DAC 150, FlackTek Inc.) vermischt und unter Ausschluss von Feuchtigkeit aufbewahrt.

Ebenso wurden die in den Tabellen 1 bis 4 angegebenen Inhaltsstoffe der Komponente-2 verarbeitet und aufbewahrt.

Anschliessend wurden die beiden Komponenten jeder Zusammensetzung mittels des Zentrifugalmischers zu einer homogenen Flüssigkeit verarbeitet und diese unverzüglich folgendermassen geprüft:
1 Minute nach dem Vermischen wurde die **Viskosität** bei 20 °C bestimmt.

Die **Topfzeit** wurde bestimmt, indem 20 Gramm der vermischten Zusammensetzung mittels eines Spatels in regelmässigen Zeitabständen bewegt wurden. War die sie für eine sinnvolle Verarbeitung gefühlsmässig erstmals zu stark angedickt, wurde die Topfzeit abgelesen.

Zur Messung der Zeit bis zur Klebefreiheit, abgekürzt als "**TFT**", wurde ein kleiner Teil der vermischten raumtemperaturwarmen Zusammensetzung in einer Schichtdicke von ca. 3 mm auf Pappkarton aufgetragen und im Normklima die Zeit bestimmt, die es dauerte, bis beim leichten Antippen der Oberfläche der Zusammensetzung mittels einer Pipette aus LDPE erstmals keine Rückstände auf der Pipette mehr zurückblieben.

Zur Bestimmung der mechanischen Eigenschaften wurde die Flüssigfolie auf eine PTFE-beschichteten Folie zu einem Film von 2 mm Dicke ausgegossen, dieser während 14 Tagen im Normklima gelagert, einige Hanteln mit einer Länge von 75 mm bei einer Steglänge von 30 mm und einer Stegbreite von 4 mm aus dem Film ausgestanzt und diese gemäss DIN EN 53504 bei einer Zuggeschwindigkeit von 200 mm/min auf **Zugfestigkeit** (Bruchkraft), **Bruchdehnung** und der Elastizitätsmodul bei 0.5 bis 5.0 % Dehnung (**E-Modul** 5%) geprüft. Weiter wurden einige Prüfkörper zur Bestimmung des **Weiterreisswiderstandes** ausgestanzt und gemäss DIN ISO 34 bei einer Zuggeschwindigkeit von 500 mm/min geprüft.

Die **Shore A-Härte** wurde bestimmt nach DIN 53505 an während 14 Tagen im Normklima ausgehärteten Prüfkörpern. Dabei wurde der Wert jeweils oben, an der der Luft zugewandten Seite des Prüfkörpers, bestimmt. Zusätzlich wurde der Prüfkörper umgedreht und ebenfalls unten, an der der Luft nicht ausgesetzten Seite, bestimmt. Die beiden Werte sind in den Tabellen 1 bis 4 angegeben als "oben/unten". Dabei ist ein möglichst ähnlicher Wert für oben und unten ein Zeichen für eine vollständige und ungestörte Aushärtung.

Nach 14 Tagen im NK wurde von allen Filmen der **Aspekt** visuell beurteilt. Alle Filme waren nach der Aushärtung absolut nicht-klebrig, frei von Blasen, und weiss bis leicht gelblich, opak bis halb transparent (bezeichnet als "opak - transparent"), mit einer glänzenden bis seidenmatten Oberfläche. Gewisse Filme zeigten Schlieren auf der Oberfläche, was jeweils angegeben ist.

Die Resultate sind in den Tabellen 1 bis 4 angegeben.

Die Beispiele ***Z-1*** bis ***Z-13*** sind nicht-erfindungsgemässe flüssig applizierte Abdichtungsfolien. Die Beispiele ***Z-14*** bis ***Z-17*** sind erfindungsgemässe flüssig applizierte Abdichtungsfolien.

**Tabelle 1: Zusammensetzung und Eigenschaften der Beispiele Z-1 bis Z-6. "Weiterreiss." steht für "Weiterreissfestigkeit" ; "transp." steht für "transparent" "n.b." steht für "nicht bestimmt"**

| | **Beispiel** | ***Z-1*** | ***Z*-2** | ***Z-3*** | ***Z-4*** | ***Z-5*** | ***Z-6*** |
|---|---|---|---|---|---|---|---|
| **Komponente-1 :** | | | | | | | |
| | STP Polymer-1 | 47.5 | 45.0 | 45.0 | 45.0 | 48.0 | 48.0 |
| | Araldite^{®} GY 250 | 38.0 | 38.0 | 38.0 | 38.0 | 38.0 | 38.0 |
| | Vinyltrimethoxysilan | 2.5 | 5.0 | 5.0 | 5.0 | 5.0 | 5.0 |
| | Dioctyladipat | 7.0 | 7.0 | 7.0 | 7.0 | 7.0 | 7.0 |
| | DBTDL 10% | 5.0 | 5.0 | 5.0 | 5.0 | 2.0 | 2.0 |

| **Komponente-2** : | | | | | | | |
|---|---|---|---|---|---|---|---|
| | Silquest^{®} A-1120 | 0.5 | 0.5 | 0.3 | 0.4 | 0.4 | 0.7 |
| | Jeffamine^{®} D-400 | 19.9 | 19.9 | - | 10.6 | 10.4 | 10.4 |
| | Vestamin^{®} TMD | 2.4 | 2.4 | - | - | - | - |
| | N-Benzyl-1,2-propandiamin | - | - | 13.0 | 8.0 | 7.2 | 6.8 |
| | Ancamine^{®} K54 | 1.2 | 1.2 | 0.7 | 1.0 | - | - |
| | Viskosität [Pa·s] | 6.1 | 3.9 | 5.1 | 4.4 | 4.7 | 4.5 |
| | TFT [min.] | 60 | 65 | 50 | 50 | 95 | 90 |
| | Aspekt | opak - transp. | opak - transp. | opak - transp. | opak - transp. | opak - transp. | opak - transp. |
| | Zugfestigkeit [MPa] | 5.3 | 5.0 | 4.2 | 6.3 | 5.8 | 5.3 |
| | Bruchdehnung | 133% | 125% | 122% | 128% | 128% | 101% |
| | E-Modul 5% [MPa] | 5.1 | 6.7 | 3.5 | 5.8 | 3.4 | 4.4 |
| | Weiterreiss. [N/mm] | 5.1 | 6.0 | 4.4 | 5.4 | 3.7 | 4.0 |
| | Shore A oben/unten | 68/68 | 67/59 | 65/63 | 69/63 | n.b. | 68/59 |

**Tabelle 2: Zusammensetzung und Eigenschaften der Beispiele Z-7 bis Z-13. "Weiterreiss." steht für "Weiterreissfestigkeit" ; "transp." steht für "transparent"**

| | **Beispiel** | ***Z-7*** | ***Z-8*** | ***Z-9*** | ***Z-10*** | ***Z-11*** | ***Z-12*** | ***Z-13*** |
|---|---|---|---|---|---|---|---|---|
| **Komponente-1** : | | | | | | | | |
| | STP Polymer-1 | 53.0 | 53.0 | 53.0 | 53.0 | 53.0 | 53.0 | 53.0 |
| | Araldite^{®} GY 250 | 38.0 | 38.0 | 38.0 | 38.0 | 38.0 | 38.0 | 38.0 |
| | Dioctyladipat | 7.0 | 7.0 | 7.0 | 7.0 | 7.0 | 7.0 | 7.0 |
| | DBTDL 10% | 2.0 | 2.0 | 2.0 | 2.0 | 2.0 | 2.0 | 2.0 |

| **Komponente-2 :** | | | | | | | | |
|---|---|---|---|---|---|---|---|---|
| | Silquest^{®} A-1120 | 0.6 | 0.5 | 0.5 | 0.5 | 0.5 | 0.4 | 0.5 |
| | Jeffamine^{®} D-400 | 26.0 | 20.8 | 22.4 | 19.1 | 19.9 | 18.3 | 19.1 |
| | N-Benzyl-1,2-propandiamin | - | 2.5 | - | - | - | - | - |
| | Gaskamine^{®} 240 | - | - | 2.7 | - | - | - | - |
| | Dytek^{®} A | - | - | - | 2.3 | - | - | - |
| | Vestamin^{®} IPD | - | - | - | - | 2.4 | - | - |
| | MXDA | - | - | - | - | - | 2.2 | - |
| | 1,3-BAC | - | - | - | - | - | - | 2.3 |
| | Ancamine^{®} K54 | 1.4 | 1.3 | 1.4 | 1.2 | 1.2 | 1.1 | 1.2 |
| Viskosität [Pa·s] | | 8.8 | 9.8 | 11.2 | 9.9 | 10.7 | 11.5 | 11.3 |
| TFT [min.] | | 70 | 60 | 70 | 70 | 65 | 65 | 55 |
| Aspekt | | opak - transp. | opak - transp. | opak - transp. | opak - transp., Schlieren | opak - transp. | opak - transp. | opak - transp., Schlieren |
| Zugfestigkeit [MPa] | | 5.6 | 5.6 | 5.1 | 5.8 | 4.1 | 3.5 | 2.7 |
| Bruchdehnung | | 123% | 118% | 108% | 138% | 97% | 102% | 86% |
| E-Modul 5% [MPa] | | 11.4 | 8.8 | 9.6 | 4.3 | 9.5 | 3.4 | 5.4 |
| Weiterreiss. [N/mm] | | 7.6 | 6.5 | 6.7 | 3.6 | 5.5 | 3.4 | 3.9 |
| Shore A oben/unten | | 72/65 | 77/64 | 74/65 | 68/66 | 75/65 | 66/65 | 68/64 |

**Tabelle 3: Zusammensetzung und Eigenschaften der Beispiele Z-4, Z14 und Z-15.**

| | **Beispiel** | ***Z-4*** | ***Z-14*** | ***Z-15*** |
|---|---|---|---|---|
| **Komponente-1** : | | | | |
| | STP Polymer-1 | 45.0 | 45.0 | 45.0 |
| | Araldite^{®} GY 250 | 38.0 | 38.0 | 38.0 |
| | Vinyltrimethoxysilan | 5.0 | 5.0 | 5.0 |
| | Dioctyladipat | 7.0 | 7.0 | 7.0 |
| | DBTDL 10% | 5.0 | 5.0 | 5.0 |

| **Komponente-2 :** | | | | |
|---|---|---|---|---|
| | Silquest^{®} A-1120 | 0.4 | 0.4 | 0.4 |
| | Jeffamine^{®} D-400 | 10.6 | 10.6 | 10.6 |
| | N-Benzyl-1,2-propandiamin | 8.0 | 8.0 | 8.0 |
| | Ancamine^{®} K54 | 1.0 | 1.0 | 1.0 |
| | Benzylalkohol | - | 5.0 | - |
| | Cardanol | - | - | 5.0 |
| | Viskosität [Pa·s] | 4.4 | 2.9 | 3.2 |
| | TFT [min.] | 50 | 80 | 65 |
| | Aspekt | opak-transparent | opak-transparent | opak-transparent |
| | Zugfestigkeit [MPa] | 6.3 | 5.6 | 7.0 |
| | Bruchdehnung [%] | 128 | 114 | 138 |
| | E-Modul 5% [MPa] | 5.8 | 5.0 | 5.7 |
| | Weiterreissfestigkeit [N/mm] | 5.4 | 4.9 | 4.8 |
| | Shore A oben/unten | 69/63 | 66/56 | 69/58 |

**Tabelle 4: Zusammensetzung und Eigenschaften der Beispiele Z-16 und Z-17. * gemessen nach 21 statt nach 14 Tagen im NK "n.b." steht für "nicht bestimmt"**

| | **Beispiel** | ***Z-16*** | ***Z-17*** |
|---|---|---|---|
| **Komponente-1:** | | | |
| | STP Polymer-1 | 44.0 | - |
| | MS Polymer^{™} S303H | - | 44.0 |
| | Araldite^{®} GY 250 | 25.6 | 25.6 |
| | Araldite^{®} PY 302-2 | 6.4 | 6.4 |
| | Araldite^{®} DY-E | 2.0 | 2.0 |
| | Rütasolv DI | 5.0 | 5.0 |
| | Vinyltrimethoxysilan | 5.0 | 5.0 |
| | Dioctyladipat | 10.0 | 10.0 |
| | DBTDL 10% | 2.0 | 2.0 |

| **Komponente-2:** | | | |
|---|---|---|---|
| | Vestamin^{®} IPD | 2.1 | 2.1 |
| | MXDA | 2.0 | 2.0 |
| | TEPA | 1.2 | 1.2 |
| | CeTePox^{®} 0214 H | 0.7 | 0.7 |
| | Ancamine^{®} K54 | 0.8 | 0.8 |
| | Benzylalkohol | 6.2 | 6.2 |
| | Viskosität [Pa·s] | 3.0 | 1.5 |
| | TFT [min.] | 75 | ca. 2 Tage |
| | Aspekt | opak-transparent | inhomogen, uneben, nicht transparent, unten klebrig |
| | Zugfestigkeit [MPa] | 3.0 | 0.9* |
| | Bruchdehnung [%] | 352 | 210* |
| | E-Modul 5% [MPa] | 0.9 | 0.7* |
| | Weiterreissfestigkeit [N/mm] | 5.4 | 3.6* |
| | Shore A oben/unten | 32/35 | n.b. |

## Patentansprüche

1. Verwendung einer Zusammensetzung umfassend
- mindestens ein bei Raumtemperatur flüssiges Silangruppen-haltiges Polymer,
- mindestens ein Epoxid-Flüssigharz und
- mindestens ein aliphatisches Polyamin mit einem Molekulargewicht von mindestens 115 g/mol, welches mindestens drei gegenüber Epoxidgruppen reaktive Aminwasserstoffe aufweist,
als flüssig applizierte Abdichtungsfolie, wobei die Zusammensetzung zusätzlich mindestens einen aromatischen Verdünner mit einem Siedepunkt von mindestens 180 °C enthält, wobei es sich bei dem mindestens einen aromatischen Verdünner um 2-Phenoxyethanol, 2-Benzyloxyethanol, Benzylalkohol, Ethylenglykoldiphenylether, Propylenglykolphenylether, N-Ethylpyrrolidon, Diphenylmethanol, Diisopropylnaphthalin, Erdölfraktionen, Cardanol, styrolisiertes Phenol, Bisphenole, Phenolgruppen-haltige Kohlenwasserstoffharze, oder ethoxyliertes oder propoxyliertes Phenol handelt.

2. Verwendung gemäss Anspruch 1, **dadurch gekennzeichnet, dass** das Silangruppen-haltige Polymer ein Silangruppen-haltiger Polyether ist.

3. Verwendung gemäss Anspruch 2, **dadurch gekennzeichnet, dass** der Silangruppen-haltiger Polyether zusätzlich zu den Silangruppen Urethangruppen und/oder Harnstoffgruppen aufweist.

4. Verwendung gemäss einem der Ansprüche 1 bis 3, **dadurch gekennzeichnet, dass** in der Zusammensetzung das Gewichtsverhältnis zwischen Silangruppenhaltigem Polymer und Epoxid-Flüssigharz im Bereich von 70/30 bis 40/60 liegt.

5. Verwendung gemäss einem der Ansprüche 1 bis 4, **dadurch gekennzeichnet, dass** das aliphatische Polyamin ein Polyoxyalkylendi- oder -triamin mit einem mittleren Molekulargewicht im Bereich von 200 bis 500 g/mol ist.

6. Verwendung gemäss einem der Ansprüche 1 bis 5, **dadurch gekennzeichnet, dass** das aliphatische Polyamin ein Amin der Formel (I) ist, 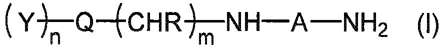 wobei
A für einen Alkylen-Rest mit 2 bis 15 C-Atomen, welcher gegebenenfalls ein oder mehrere Stickstoffatome enthält, steht,
R unabhängig voneinander für einen Wasserstoff- oder Methyl- oder PhenylRest steht,
Q für einen fünf-, sechs- oder siebengliedrigen, im Ring gegebenenfalls ein Sauerstoff-, Schwefel- oder Stickstoffatom aufweisenden Cycloalkyl- oder ArylRest mit 4 bis 7 C-Atomen steht,
Y für gleiche oder verschiedene Reste ausgewählt aus der Gruppe bestehend aus Alkyl, Alkoxy und Dialkylamino mit 1 bis 18 C-Atomen steht,
m für 1 oder 2 steht und
n für 0 oder 1 oder 2 oder 3 steht.

7. Verwendung gemäss einem der Ansprüche 1 bis 6, **dadurch gekennzeichnet, dass** die Zusammensetzung zusätzlich mindestens einen Reaktivverdünner, welcher mindestens eine Epoxidgruppe aufweist, enthält.

8. Verwendung gemäss einem der Ansprüche 1 bis 7, **dadurch gekennzeichnet, dass** die Zusammensetzung eine zweikomponentige Zusammensetzung bestehend aus einer ersten und einer zweiten Komponente, welche voneinander getrennt herstellt, verpackt und gelagert werden, ist, wobei das aliphatische Polyamin nicht in der gleichen Komponente wie das Epoxid-Flüssigharz vorliegt.

9. Verwendung gemäss einem der Ansprüche 1 bis 7, **dadurch gekennzeichnet, dass** die Zusammensetzung eine dreikomponentige Zusammensetzung bestehend aus einer ersten, einer zweiten und einer dritten Komponente, welche voneinander getrennt herstellt, verpackt und gelagert werden, ist, wobei das Epoxid-Flüssigharz, das aliphatische Polyamin und das Silangruppen-haltige Polymer je in einer separaten Komponente vorliegen.

10. Verwendung gemäss einem der Ansprüche 1 bis 9, **dadurch gekennzeichnet, dass** die Zusammensetzung zusätzlich mindestens einen weiteren Bestandteil ausgewählt aus Trocknungsmitteln, Beschleunigern und Weichmachern enthält.

11. Verwendung gemäss einem der Ansprüche 1 bis 10, **dadurch gekennzeichnet, dass** die Zusammensetzung im ausgehärteten Zustand bei Raumtemperatur eine Bruchdehnung von mindestens 50 % aufweist.

12. Verwendung gemäss einem der Ansprüche 1 bis 11, **dadurch gekennzeichnet, dass** die Zusammensetzung als Abdichtungsfolie auf einem Dach eingesetzt wird.

13. Ausgehärtete Zusammensetzung, erhalten aus der Verwendung gemäss einem der Ansprüche 1 bis 12 durch Vermischen aller Inhaltsstoffe bzw. Komponenten der Zusammensetzung, der Applikation der vermischten Zusammensetzung und deren Aushärtung.

14. Dachabdichtungssystem, umfassend
- gegebenenfalls einen Primer und/oder eine Grundierung und/oder eine Reparatur- oder Nivelliermasse,
- mindestens eine Schicht der Zusammensetzung wie in einem der Ansprüche 1 bis 11 beschrieben in einer Schichtdicke von 0.5 bis 3 mm, gegebenenfalls in Kombination mit einer mechanischen Verstärkung,
- gegebenenfalls eine Deckbeschichtung und/oder Versiegelung.

## Claims

1. Use of a composition comprising
- at least one polymer which is liquid at room temperature and contains silane groups,
- at least one liquid epoxy resin, and
- at least one aliphatic polyamine having a molecular weight of at least 115 g/mol and containing at least three amine hydrogens that are reactive towards epoxide groups,
as liquid-applied sealing membrane, wherein the composition additionally comprises at least one aromatic diluent having a boiling point of at least 180°C, wherein the at least one aromatic diluent comprises 2-phenoxyethanol, 2-benzyloxyethanol, benzyl alcohol, ethylene glycol diphenyl ether, propylene glycol phenyl ether, N-ethylpyrrolidone, diphenylmethanol, diisopropylnaphthalene, petroleum fractions, cardanol, styrenized phenol, bisphenols, hydrocarbon resins containing phenol groups, or ethoxylated or propoxylated phenol.

2. Use according to Claim 1, **characterized in that** the polymer containing silane groups is a polyether containing silane groups.

3. Use according to Claim 2, **characterized in that** the polyether containing silane groups contains urethane groups and/or urea groups additionally to the silane groups.

4. Use according to any of Claims 1 to 3, **characterized in that** in the composition the weight ratio between polymer containing silane groups and liquid epoxy resin is in the range from 70/30 to 40/60.

5. Use according to any of Claims 1 to 4, **characterized in that** the aliphatic polyamine is a polyoxyalkylenediamine or -triamine having an average molecular weight in the range from 200 to 500 g/mol.

6. Use according to any of Claims 1 to 5, **characterized in that** the aliphatic polyamine is an amine of the formula (I), 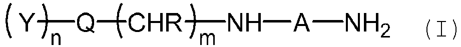 where
A is an alkylene radical having 2 to 15 carbon atoms which optionally contains one or more nitrogen atoms,
R each independently is a hydrogen or methyl or phenyl radical,
Q is a five-, six- or seven-membered cycloalkyl or aryl radical optionally having an oxygen, sulfur or nitrogen atom in the ring and having 4 to 7 carbon atoms,
Y represents identical or different radicals selected from the group consisting of alkyl, alkoxy and dialkylamino having 1 to 18 carbon atoms,
m is 1 or 2, and
n is 0 or 1 or 2 or 3.

7. Use according to any of Claims 1 to 6, **characterized in that** the composition additionally comprises at least one reactive diluent which contains at least one epoxide group.

8. Use according to any of Claims 1 to 7, **characterized in that** the composition is a two-component composition consisting of a first component and a second component, which are produced, packaged and stored separately from one another, the aliphatic polyamine not being present in the same component as the liquid epoxy resin.

9. Use according to any of Claims 1 to 7, **characterized in that** the composition is a three-component composition consisting of a first component, a second component and a third component, which are produced, packaged and stored separately from one another, the liquid epoxy resin, the aliphatic polyamine and the polymer containing silane groups each being present in a separate component.

10. Use according to any of Claims 1 to 9, **characterized in that** the composition additionally comprises at least one further constituent selected from driers, accelerators and plasticizers.

11. Use according to any of Claims 1 to 10, **characterized in that** the composition in the cured state at room temperature has an elongation at break of at least 50%.

12. Use according to any of Claims 1 to 11, **characterized in that** the composition is used as a sealing membrane on a roof.

13. Cured composition obtained from the use according to any of Claims 1 to 12 by mixing all of the ingredients and/or components of the composition, applying the mixed composition and curing the applied composition.

14. Roof sealing system comprising
- optionally a primer and/or a priming coat and/or a repair or levelling compound,
- at least one layer of the composition as described in any of Claims 1 to 11 in a layer thickness of 0.5 to 3 mm, optionally in combination with a mechanical reinforcement,
- optionally a topcoat and/or seal.

## Revendications

1. Utilisation d'une composition comprenant
- au moins un polymère liquide à la température ambiante, contenant des groupes silane,
- au moins une résine liquide époxyde et
- au moins une polyamine aliphatique ayant une masse moléculaire d'au moins 115 g/mol, qui comprend au moins trois hydrogènes d'amine réactifs vis-à-vis des groupes époxyde,
comme feuille d'étanchéité appliquée à l'état liquide, la composition contenant en outre au moins un diluant aromatique ayant un point d'ébullition d'au moins 180 °C, l'au moins un diluant aromatique étant le 2-phénoxyéthanol, le 2-benzyloxyéthanol, l'alcool benzylique, l'éther diphénylique de l'éthylèneglycol, l'éther phénylique du propylèneglycol, la N-éthylpyrrolidone, le diphénylméthanol, le diisopropylnaphtalène, les fractions pétrolières, le cardanol, le phénol styrénisé, les bisphénols, les résines hydrocarbonées contenant des groupes phénol, ou un phénol éthoxylé ou propoxylé.

2. Utilisation selon la revendication 1, **caractérisée en ce que** le polymère contenant des groupes silane est un polyéther contenant des groupes silane.

3. Utilisation selon la revendication 2, **caractérisée en ce que** le polyéther contenant des groupes silane comprend, outre les groupes silane, des groupes uréthane et/ou des groupes urée.

4. Utilisation selon l'une des revendications 1 à 3, **caractérisée en ce que**, dans la composition, le rapport en poids entre le polymère contenant des groupes silane et la résine liquide époxyde est compris dans la plage de 70/30 à 40/60.

5. Utilisation selon l'une des revendications 1 à 4, **caractérisée en ce que** la polyamine aliphatique est une polyoxyalkylènedi- ou -triamine ayant une masse moléculaire moyenne dans la plage de 200 à 500 g/mol.

6. Utilisation selon l'une des revendications 1 à 5, **caractérisée en ce que** la polyamine aliphatique est une amine de formule (I), 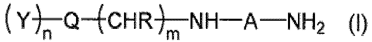 dans laquelle
A représente un radical alkylène ayant 2 à 15 atomes de carbone, qui éventuellement contient un ou plusieurs atomes d'azote,
R, indépendamment les uns des autres, représente un hydrogène ou un radical méthyle ou phényle,
Q représente un radical cycloalkyle ou aryle ayant 4 à 7 atomes de carbone, à 5, 6 ou 7 chaînons, comprenant éventuellement dans le cycle, un atome d'oxygène, de soufre ou d'azote,
Y représente des radicaux identiques ou différents choisis dans le groupe consistant en un alkyle, un alcoxy ou un dialkylamino ayant 1 à 18 atomes de carbone,
m représente 1 ou 2 et
n représente 0 ou 1 ou 2 ou 3.

7. Utilisation selon l'une des revendications 1 à 6, **caractérisée en ce que** la composition contient en outre au moins un diluant réactif, qui comprend au moins un groupe époxyde.

8. Utilisation selon l'une des revendications 1 à 7, **caractérisée en ce que** la composition est une composition bi-composant, constituée d'un premier et d'un second composant, qui sont fabriqués, conditionnés et stockés indépendamment les uns des autres, la polyamine aliphatique n'étant pas présente dans le même composant que la résine liquide époxyde.

9. Utilisation selon l'une des revendications 1 à 7, **caractérisée en ce que** la composition est une composition à trois composants, consistant en un premier, un deuxième et un troisième composant, qui sont fabriqués, conditionnés et stockés séparément les uns des autres, la résine liquide époxyde, la polyamine aliphatique et le polymère contenant des groupes silane étant chacun présents dans un composant distinct.

10. Utilisation selon l'une des revendications 1 à 9, **caractérisée en ce que** la composition contient en outre au moins un constituant supplémentaire choisi parmi les agents déshydratants, les accélérateurs et les plastifiants.

11. Utilisation selon l'une des revendications 1 à 10, **caractérisée en ce que** la composition présente à l'état durci à la température ambiante un allongement à la rupture d'au moins 50 %.

12. Utilisation selon l'une des revendications 1 à 11, **caractérisée en ce que** la composition est utilisée comme feuille d'étanchéité sur un toit.

13. Composition durcie obtenue grâce à l'utilisation selon l'une des revendications 1 à 12 par mélange de tous les constituants ou composants de la composition, de l'application de la composition mélangée et de son durcissement.

14. Système d'étanchéité de toit comprenant
- éventuellement une couche primaire et/ou une couche de fond et/ou une masse de réparation ou de nivellement,
- au moins une couche de la composition telle que décrite dans l'une des revendications 1 à 11 sur une épaisseur de couche de 0,5 à 3 mm, éventuellement en combinaison avec un renforcement mécanique,
- éventuellement un revêtement de toit ou un scellement.
